# EUROPÄISCHE PATENTSCHRIFT

(11) **EP 2 990 128 B1**
(45) Veröffentlichungstag und Bekanntmachung des Hinweises auf die Patenterteilung: **23.08.2017**
(21) Anmeldenummer: 14182315.3
(22) Anmeldetag: 26.08.2014
(51) Int. Cl.: B05D 7/22, B08B 9/032, E03B 7/00, F16L 55/164, F16L 55/18

(54) **Subverteiler zur Bearbeitung eines Inneren eines Rohrleitungssystems, Heizverfahren, sowie ein Bearbeitungssystem**
Subdistributor for processing an interior of a pipeline system, heating method and a processing system
Sous-distributeur de traitement d'une face intérieure d'un système de conduite, procédé de chauffage et système de traitement

(43) Veröffentlichungstag der Anmeldung: 02.03.2016
(73) Patentinhaber: CEC-System SA, 8103 Unterenstringen (CH)
(72) Erfinder: Ohanessian, Roben, 8103 Unterengstringen (CH)
(74) Vertreter: Intellectual Property Services GmbH

(56) Entgegenhaltungen:
- EP-B1- 2 188 062
- US-A- 4 454 174
- US-A1- 2004 110 450
- US-A1- 2012 174 987

## Beschreibung

Die Erfindung betrifft einen Subverteiler zur Bearbeitung eines Inneren eines Rohrleitungssystems, ein Heizverfahren zum Heizen des Inneren des Rohrleitungssystems sowie ein Bearbeitungssystem zur Bearbeitung eines Inneren eines Rohrleitungssystems gemäss dem Oberbegriff des unabhängigen Anspruchs der jeweiligen Kategorie.

Im Stand der Technik sind eine Vielzahl von Verfahren bekannt, mit welchen in die Jahre gekommene Rohrleitungssysteme in Gebäuden, zum Beispiel Warm- oder Kaltwasser Rohrleitungssysteme, Rohrleitungssysteme von Heizungen, zum Beispiel von Fussbodenheizungen oder auch Rohrleitungssysteme anderer Art saniert werden können. Derartige Bearbeitungsverfahren, wie z.B. gemäss US 2004/110450 A1 oder US 4 454 174 A umfassen oft ein Reinigungsverfahren zum Reinigen des Inneren des Rohrleitungssystems mit Druckluft und / oder einem Reinigungsfluid, einem Strahlverfahren, insbesondere Sandstrahlverfahren zum Sandstrahlen des Inneren des Rohrleitungssystems. Sehr häufig werden solche Rohrleitungssysteme dann abschliessend im Inneren beschichtet, meist mittels eines zertifizierten Epoxidharzes, vor allem dann, wenn die Rohrleitungssysteme Trinkwasser befördern, das natürlich in einwandfreier Qualität das Rohrleitungssysteme wieder verlassen muss, ohne durch die Beschichtung des Rohrleitungssystems in irgendeiner Weise kontaminiert zu werden und somit in gesundheitlich unbedenklichem Zustand zur Verfügung stehen muss. Im Laufe der vorgenannten Bearbeitungsschritte kommt dabei meist vor oder nach einem oder mehreren der genannten Bearbeitungsschritte noch ein Trocknungsverfahren zum Trocknen des Inneren des Rohrleitungssystems zur Anwendung, beispielsweise um das Innere des Rohrleitungssystems für einen nachfolgenden Bearbeitungsschritt vorzubereiten oder zum Beispiel um das Trocknen der aufgebrachten Beschichtung, zum Beispiel der Epoxidharzbeschichtung zu unterstützen.

Der Erfinder vorliegenden Erfindung hat bereits früher in der WO 2010/020272 A1 und der WO 2010/020273 A1 Vorrichtungen und Verfahren zur Durchführung der genannten Rohrsanierungen vorgeschlagen, mit der wesentliche im damaligen im Stand der Technik bekannte Mängel behoben werden konnten.

Sehr häufig werden derartige Verfahren angewendet um z.B. rostende oder sonst wie korrodierte Wasserleitungen in Gebäuden zu Trocknen, mit Sandstrahlen zu Entrosten und dann mit einer Schicht aus Epoxydharz oder einer anderen Kunststoffschicht zu Beschichten. Selbstverständlich sind diese Verfahren auch zur Sanierung vieler anderer Arten von Rohrleitungssystemen grundsätzlich geeignet. Da die Sanierung von Wasserleitungssystemen in der Praxis jedoch wahrscheinlich die grösste Bedeutung hat, wird im Rahmen dieser Anmeldung die Erfindung hauptsächlich anhand der Sanierung von Wasserleitungssystemen in Hausinstallationen exemplarisch erläutert. Der Fachmann versteht jedoch ohne Weiteres, dass sich die Erfindung im Prinzip auf die Bearbeitung bzw. Sanierung beliebiger Rohrleitungssysteme bezieht, die durch die entsprechenden Verfahrensschritte prinzipiell behandelt werden können.

Die Wasserleitungen in einem Gebäude sind meist in verschiedene Leitungsstränge aufgeteilt. Typisch ist beispielsweise der Leitungsstrang in einem Nassraum in einer Wohnung oder in einem Haus. Kaltwasserrohre bilden einen ersten Rohrstrang und führen zu Toilette, Badwanne, Waschtisch und Dusche. Warmwasserrohre zu Waschtisch, Bad und Dusche bilden einen zweiten Rohrstrang. Der Warmwasserstrang wird vom Warmwasserboiler gespeist. Auch die Rohre, die den Warmwasserstrang bilden können korrodieren und rosten. Weitere Rohrstränge in Häusern und Wohnungen gibt es in der Küche und in der Waschküche, werden durch Heizungsrohrsysteme gebildet, usw..

Die häufigste Anwendung bekannter Bearbeitungsverfahren ist heute wie eingangs erwähnt das Beschichten der Kalt- und Warmwasserrohre und - rohrstränge in Gebäuden.

Ein Problem für das Beschichten besteht bei Gebäuden häufig darin, dass keine Pläne für das Sanitär-Leitungssystem existieren. Und wenn solche Pläne existieren, sind die Rohre oft anders als auf den Plänen angegeben verlegt. Bei den meisten bekannten Beschichtungsverfahren kann dies zur Folge haben, dass Rohrabschnitte nicht beschichtet werden. Einer der wesentlichen Gründe dafür ist, dass bei vielen bekannten Verfahren jedem Anschlussrohr z.B. den drei Rohren für Toilette, Waschtisch und Badewanne gleichzeitig das noch flüssige Beschichtungsmittel in den Rohrstrang eingeblasen wird. Es wird dabei bei jedem Anschlussrohr eine solche Menge Beschichtungsmittel eingeblasen, die aufgrund der Pläne aus der Länge und dem Durchmesser der Rohre bestimmt wurde.

Wenn die effektive Länge der Rohre der aus den Plänen ermittelten Länge entspricht, kann davon ausgegangen werden, dass die Beschichtung vollständig ist. Es kommt aber vor, dass die verwendeten Rohre einen ganz oder auch nur streckenweise grösseren Innendurchmesser aufweisen als angenommen wurde, so dass die berechnete Menge Beschichtungsmittel zu klein ist und eine grössere Menge Beschichtungsmittel erforderlich wäre für eine vollständige Beschichtung.

Auch der umgekehrte Fall kommt in der Praxis vor, nämlich dass die Menge an Epoxidharz zu gross berechnet wurde, weil die Rohre ganz oder streckenweise dünner als vermutet sind, oder die Rohrlänge tatsächlich kürzer ist als angenommen, was dazu führt, dass in einen bestimmten Rohrabschnitt zu viel Beschichtungsmaterial eingeblasen wird, so dass die Innenwand des Rohrs zu dick beschichtet wird, oder im Extremfall das Rohr vom Beschichtungsmaterial sogar verstopft wird.

Aber auch bereits bei den Vorbereitungsverfahren die dem eigentlichen Beschichtungsvorgang in der Regel vorgeschaltet werden müssen, haben die aus dem Stand der Technik bisher nicht behobene Mängel.

So muss meist in einem ersten Schritt das Rohrleitungssystem komplett entwässert und getrocknet werden. Bei den bisher bekannten Verfahren wird, nachdem das in den Rohren befindliche Wasser an einem tiefsten Punkt abgelassen wurde, einfach an einer oder mehreren Zugangsstellen des Rohrleitungssystems warme Luft für eine bestimmte Zeitdauer eingeblasen. Sehr häufig, vor allem dann wenn das Rohrleitungssystem viele Biegungen hat, wird dabei jedoch nicht alles Wasser entfernt, da sich das Wasser in den Biegungen des Rohrleitungssystems festsetzt und nicht ausgeblasen wird.

Ganz verwandte Probleme ergeben sich beim anschliessenden Sandstrahlen des Rohrleitungssystems. Auch hier werden häufig gerade die Biegungen nur ungenügend durch das Sandstrahlen gereinigt oder an kritischen Stellen gar nicht erreicht. Auch müssen die bekannten Verfahren mit hohen Strahldrücken arbeiten, insbesondere um die Probleme an den Biegungen in den Griff zu bekommen, was nicht selten bei dünnen oder bereits stark abgenutzten Rohren dazu führt, dass die Rohre an den Biegungen von dem Sandstrahl geradezu durchgeschossen werden, was unweigerlich dazu führt, dass das Mauerwerk in dem die Rohre verlegt sind aufgebrochen werden muss und die alten Rohre durch neue ersetzt werden müssen, was durch das Beschichten ja gerade vermieden werden soll.

Ähnlich Probleme wie beim zuvor beschrieben Entleeren des Rohrleitungssystems treten konsequenterweise auch beim Entstauben des Rohrleitungssystems auf, das nach dem Sandstrahlen und vor dem Beschichten durchgeführt werden muss. Bis zum Bekanntwerden der Erfindungen gemäss WO 2010/020272 A1 und WO 2010/020273 A1 gab es keine zuverlässige bzw. für die Praxis brauchbare Möglichkeit festzustellen, ob der Rohrstrang vollständig mit Beschichtungsmittel beschichtet ist bzw. ob die Dicke der Beschichtung den vorgegebenen Sollwert hat. Auch waren bis dahin die geschilderten Probleme bei den Vorbereitungsschritten ungelöst und mussten billigend in Kauf genommen werden.

Gemäss WO 2010/020272 A1 und WO 2010/020273 A1 wurden die Probleme bei den Vorbereitungsmassnahmen wie Entleerung, Trocknung, Sandstrahlen oder Entstaubung dadurch gelöst, dass in mindestens einem Bearbeitungsschritt die Richtung des Fluidstroms durch das Teilsystem zwischen dem ersten Anschluss und dem zweiten Anschluss mindestens einmal umgekehrt wird. Dadurch wurde einerseits eine zuverlässige Entleerung, Trocknung und Entstaubung des zu sanierenden Rohrsystems erstmals möglich, da insbesondere auch die Rückstände aus den Biegungen zuverlässig entfernt werden können. Darüber hinaus ist vor allem auch der Strahlprozess deutlich schonender, da in beide Richtungen gestrahlt wird, so dass mit kleinerem Strahldruck gearbeitet werden kann und trotzdem die Biegungen des Rohrsystems zuverlässig gereinigt werden.

Die geschilderten damals bestehenden Probleme beim Beschichten wurden gemäss WO 2010/020272 A1 und WO 2010/020273 A1 dadurch gelöst, dass gleichzeitig ein unter einem Beschichtungsüberdruck stehendes erstes Druckfluid und ein unter einem Beschichtungsunterdruck stehendes zweites Druckfluid, beides in der Regel Luft, bereitgestellt wird. Ein Druckausgang eines Vorratsbehälter, der einen Vorrat an Beschichtungsmaterial enthält, wird mit einem ersten Anschluss eines Teilsystems des Rohrleitungssystems verbunden, wobei der Vorratsbehälter über einen Druckeingang mit dem unter dem Beschichtungsüberdruck stehenden ersten Druckfluid beaufschlagt wird. Ein zweiter Anschluss des Teilsystems wird mit dem unter dem Beschichtungsunterdruck stehenden zweiten Druckfluid verbunden. Dann wird das erste Teilsystem über den ersten Anschluss des ersten Teilsystems mit dem unter dem Beschichtungsüberdruck stehenden ersten Druckfluid und über den zweiten Anschluss des ersten Teilsystems gleichzeitig mit dem unter dem Beschichtungsunterdruck stehenden zweiten Druckfluid derart mit einem Differenzdruck beaufschlagt, dass zwischen dem ersten Anschluss des ersten Teilsystems und dem zweiten Anschluss des ersten Teilsystems in Richtung vom ersten Anschluss zum zweiten Anschluss ein Fluidstrom aus dem Beschichtungsmaterial und dem ersten Druckfluid derart durch das erste Teilsystem generiert wird, dass eine Innenwand des Teilsystems mit dem Beschichtungsmaterial beschichtet wird. Gemäss dieser Erfindung wird, nachdem ein Austritt des Beschichtungsmaterials aus dem zweiten Anschluss des ersten Teilsystems an einem Kontrollpunkt detektiert wird, der zweite Anschluss des ersten Teilsystems mit dem unter dem Beschichtungsüberdruck stehenden ersten Druckfluid beaufschlagt. Dadurch war es erstmals möglich ein Rohrleitungssystem zuverlässig, vollständig und gleichmässig im Inneren zu Beschichten und das selbst dann, wenn überhaupt keine oder nur ungenaue Pläne über den Verlauf des Rohrleitungssystems in der Wand vorhanden sind.

Zum besseren Verständnis der vorliegenden Erfindung wird zunächst das aus den Schriften WO 2010/020272 A1 und WO 2010/020273 A1 bereits bekannte innovative Vorbereitungs- und Beschichtungsverfahren kurz erläutert.

Bevor ein zu sanierendes Rohrleitungssystem z.B. mit einer Epoxidharzschicht abschliessend saniert werden kann, sind meist eine ganze Reihe vorbereitender Arbeiten und Verfahrensschritte notwendig: Das Rohrleitungssystem muss zunächst entleert und getrocknet werden, danach muss das Rohrleitungssystem zur Entrostung und Entfernung von Ablagerungen mit einem Sandstrahlverfahren bearbeitet werden und zuletzt zur Entfernung des Staubs noch entstaubt werden. Da die wesentlichen grundlegenden Verfahrensabläufe für die vorgenannten Vorbereitungsverfahren mehr oder weniger identisch sind bzw. der Fachmann diese ohne weiteres von einem der genannten Vorbereitungsverfahren auf eines der anderen zu übertragen weiss, wird im folgenden nur das Entleeren und das Trocknen, sowie ganz kurz der wesentliche Schritt des Sandstrahlens exemplarisch erläutert.

Allen genannten Vorbereitungsverfahren ist gemeinsam, dass ein Rohrleitungssystem mit einem Teilsystem zwischen einem ersten Anschluss und einem zweiten Anschluss bearbeitet wird und das Vorbereitungsverfahren die folgenden Bearbeitungsschritte umfasst: Bereitstellung eines ersten Arbeitsmediums, welches in Bezug auf einen Umgebungsdruck unter einem Überdruck steht.

Bereitstellung eines zweiten Arbeitsmediums, welches in Bezug auf den Umgebungsdruck unter einem Unterdruck steht. Bevorzugt sind beide Arbeitsmedien einfach Umgebungsluft. Dabei wird das Teilsystem zwischen dem ersten Anschluss und dem zweiten Anschluss gleichzeitig mit dem unter Überdruck stehenden ersten Arbeitsmedium und dem unter dem Unterdruck stehenden zweiten Arbeitsmedium derart beaufschlagt wird, dass zwischen dem ersten Anschluss des Teilsystems und dem zweiten Anschluss des Teilsystems in einer Richtung ein Fluidstrom des unter dem Überdruck stehenden ersten Arbeitsmediums zu dem unter dem Unterdruck stehenden zweiten Arbeitsmedium durch das Teilsystem generiert wird. Vorteilhaft wird in mindestens einem Bearbeitungsschritt die Richtung des Fluidstroms durch das Teilsystem zwischen dem ersten Anschluss und dem zweiten Anschluss mindestens einmal umgekehrt wird.

Wesentlich für die verschiedenen Vorbereitungsverfahren gemäss WO 2010/020272 A1 und WO 2010/020273 A1 ist es somit, dass in mindestens einem Bearbeitungsschritt die Richtung des Fluidstroms durch das Teilsystem zwischen dem ersten Anschluss und dem zweiten Anschluss mindestens einmal umgekehrt wird. Dadurch ist einerseits eine zuverlässige Entleerung, Trocknung und Entstaubung des zu sanierenden Rohrsystems erstmals möglich, da insbesondere auch die Rückstände aus den Biegungen zuverlässig entfernt werden können. Darüber hinaus ist vor allem auch der Strahlprozess deutlich schonender, da in beide Richtungen gestrahlt wird, so dass im Vergleich zum Stand der Technik mit kleinerem Strahldruck gearbeitet werden kann und trotzdem die Biegungen des Rohrsystems zuverlässig gereinigt werden.

In der Praxis wird das unter Überdruck stehende erste Arbeitsmedium vorteilhaft von einem Kompressor und das unter dem Unterdruck stehende zweite Arbeitsmedium von einer Absaugmaschine bereitgestellt.

Vorteilhaft wird eine Luftregelstation zur Einstellung des Überdrucks sowie ein Wasserabscheider oder ein Zyklonabscheider zur Abscheidung von diversen Fluiden, insbesondere von Wasser, Öl, Epoxidharz oder zur Abscheidung von Partikeln, insbesondere von abrasiven Teilchen wie Sand, vorgesehen.

Zur effizienten Durchführung der Vorbereitungsverfahren und dem anschliessenden Beschichtungsverfahren wird zunächst das gesamte Rohrleitungssystem mit Verteilern, also mit Hauptverteilern und Subverteilern zur Verteilung des ersten und des zweiten Arbeitsmediums an die Anschlüsse des Rohrleitungssystems angeschlossen sowie mit der Luftregelstation und mit dem Wasserabscheider und / oder dem Zyklonabscheider vernetzt. Der Begriff Hauptverteiler und Subverteiler bezieht sich dabei häufig mehr auf die spezielle Funktion im Verteilernetzwerk als auf die konkrete Ausgestaltung der unterschiedlichen Verteilertypen. Die Hauptverteiler und Subverteiler können in der Praxis durch dieselben Geräte realisiert sein. Wobei im Rahmen der vorliegenden Erfindung, wie später noch erläutert werden wird, hauptsächlich die Subverteiler mit einer Heizung ausgestattet sind, während die Hauptverteiler nicht unbedingt und nur optional eine Heizung umfassen.

Besonders effizient lassen sich die Bearbeitungsverfahren dadurch gestalten, dass eine elektronische Datenverarbeitungsanlage vorgesehen wird und mindestens ein Teil der Hauptverteiler und / oder der Subverteiler und / oder der Luftregelstationen und / oder der Wasserabscheider und / oder der Zyklonabscheider derart ausgestaltet ist, dass die Vorbereitungsverfahren und / oder das anschliessende Beschichtungsverfahren zumindest teilweise automatisch und / oder programmgesteuert durchgeführt werden kann, was selbstverständlich auch für die vorliegende Erfindung gilt.

Exemplarisch für die oben erwähnten unterschiedlichen Vorbereitungsverfahren gemäss WO 2010/020272 A1 und WO 2010/020273 A1 wird jetzt ein Vorbereitungsverfahren zur Entleerung und / oder Austrocknung des Rohrleitungssystems diskutiert, das die folgenden Schritte umfasst und abgesehen von dem erfindungsgemässen Heizschritten so auch bevorzugt im Zusammenhang mit der vorliegenden Erfindung benutzt wird: Bereitstellung eines ersten Arbeitsmediums, insbesondere Luft, welches erste Arbeitsmedium in Bezug auf den Umgebungsdruck unter dem Überdruck steht. Bereitstellung eines zweiten Arbeitsmediums, insbesondere Luft, welches zweite Arbeitsmedium in Bezug auf den Umgebungsdruck unter dem Unterdruck steht. Dabei wird das Teilsystem in einem ersten Vorbereitungsschritt über den ersten Anschluss mit dem unter dem Überdruck stehenden ersten Arbeitsmedium und über den zweiten Anschluss gleichzeitig mit dem unter Unterdruck stehenden zweiten Arbeitsmedium derart beaufschlagt, dass zwischen dem ersten Anschluss des Teilsystems und dem zweiten Anschluss des Teilsystems in Richtung vom ersten Anschluss zum zweiten Anschluss ein Fluidstrom des ersten Arbeitsmediums derart durch das Teilsystem generiert wird, dass das Teilsystem von einem Prozessstoff, insbesondere von Wasser vor-entleert wird. In einem zweiten Vorbereitungsschritt wird das Teilsystem über den ersten Anschluss mit dem unter dem Unterdruck stehenden zweiten Arbeitsmedium und über den zweiten Anschluss gleichzeitig mit dem unter dem Überdruck stehenden ersten Arbeitsmedium derart beaufschlagt, dass die Richtung des Fluidstroms durch das Teilsystem zwischen dem ersten Anschluss und dem zweiten Anschluss umgekehrt wird, so dass das Teilsystem von einem noch verbleibenden Rest des Prozessstoffes nach-entleert wird. Zum Ausblasen des Teilsystems nach der Vor-Entleerung und der Nach-Entleerung des Teilsystems werden vorteilhaft alle Anschlüsse aller Teilsysteme des Subsystems für eine vorgegebene Ausblasdauer mit dem unter dem Überdruck stehenden ersten Arbeitsmedium beaufschlagt.

Nach der Entleerung des kompletten Rohrleitungssystems sollte das Rohrleitungssystem zur Trocknung für eine vorgegebene Auswärmdauer mit einem erhitzen Ausheizmedium, insbesondere mit Warmluft bei einer vorgegebenen Temperatur, bevorzugt z.B. bei mehr als 37° für ca. 45 min ausgeheizt werden. Die Warmluft wurde dabei im Stand der Technik bisher in der Regel von einer zentralen Heizeinheit durch Aufheizen des unter dem Überdruck stehenden ersten Arbeitsmediums bereitgestellt, was natürlich den Nachteil hatte, dass die Temperatur des ersten Arbeitsmediums neben anderen Faktoren stark vom Abstand zur zentralen Heizeinheit abhängig war.

Nach dem vollständigen Entleeren und Ausheizen des Rohrleitungssystems wird zum Entrosten und Entfernen von Ablagerungen im Rohrleitungssystem in der Regel ein Strahlverfahren, insbesondere ein mechanisch abrasives Strahlverfahren, bevorzugt ein Sandstrahlverfahren zum Strahlen des Rohrleitungssystems angewendet, welches Strahlverfahren die folgenden Schritte umfasst: Bereitstellung eines ersten Arbeitsmediums als Strahlmedium umfassend ein Strahlmittel, insbesondere Sand-Luft Gemisch mit Sand, welches erste Strahlmedium in Bezug auf den Umgebungsdruck unter dem Überdruck steht. Bereitstellung eines zweiten Arbeitsmediums, ebenfalls meist Luft, welches zweite Arbeitsmedium in Bezug auf den Umgebungsdruck unter dem Unterdruck steht, wobei das Teilsystem in einem ersten Strahlschritt über den ersten Anschluss mit dem unter dem Überdruck stehenden ersten Strahlmedium und über den zweiten Anschluss gleichzeitig mit dem unter dem Unterdruck stehenden zweiten Arbeitsmedium derart beaufschlagt wird, dass zwischen dem ersten Anschluss des Teilsystems und dem zweiten Anschluss des Teilsystems in Richtung vom ersten Anschluss zum zweiten Anschluss ein Fluidstrom des ersten Strahlmediums derart durch das Teilsystem generiert wird, dass eine Innenwand des Teilsystem vor-gestrahlt wird und in einem zweiten Strahlschritt das Teilsystem über den ersten Anschluss mit dem unter dem Unterdruck stehenden zweiten Arbeitsmedium und über den zweiten Anschluss gleichzeitig mit dem unter dem Überdruck stehenden ersten Strahlmedium derart beaufschlagt wird, dass die Richtung des Fluidstroms durch das Teilsystem zwischen dem ersten Anschluss und dem zweiten Anschluss umgekehrt wird, so dass das Teilsystem nacheinander in zwei entgegengesetzte Richtungen mit dem Strahlmittel zunächst in einer Richtung vor-gestrahlt und dann in der entgegengesetzten Richtung nach-gestrahlt wird.

Dabei versteht sich von selbst, dass wenn im Rahmen dieser Anmeldung von "dem Überdruck" oder "dem Unterdruck" die Rede ist, der aktuelle Wert des Überdrucks oder Unterdrucks in den verschiedenen Prozessschritten verschieden sein kann im Speziellen sogar während eines bestimmtem Prozessschrittes variiert werden kann. Das gilt insbesondere für die vorliegende Erfindung, aber natürlich auch für die hier beschriebenen bekannten Verfahren.

Nach dem Strahlen des Rohrleitungssystems wird zu dessen Entstaubung ein Entstaubungsverfahren angewendet, dass, wie der Fachmann leicht versteht und er der WO 2010/020272 A1 oder WO 2010/020273 A1 auch explizit entnehmen kann, den gleichen Prinzipien der wechselseitigen Beaufschlagung mit Überdruck und Unterdruck folgt.

Als wesentlicher Schritt kommt schliesslich ein Beschichtungsverfahren zur Beschichtung des Inneren des Rohrleitungssystems mit einem Beschichtungsmaterial, in der Praxis meist ein Epoxidharz, zur Anwendung, wobei das Rohrleitungssystem wie bereits mehrfach erwähnt ein Teilsystem zwischen einem ersten Anschluss und einem zweiten Anschluss umfasst, und das Beschichtungsverfahren in einem ersten Verfahrensschritt die folgenden Schritte in beliebiger Reihenfolge umfasst: Bereitstellung des ersten Druckfluids, insbesondere Luft, welches erste Druckfluid in Bezug auf einen Umgebungsdruck unter dem Überdruck steht. Bereitstellung des zweiten Druckfluids, insbesondere Luft, welches zweite Druckfluid in Bezug auf den Umgebungsdruck unter Unterdruck steht. Bereitstellung des Beschichtungsmaterials in einem Vorratsbehälter, insbesondere Vorratsschlauch. Verbinden eines Druckausgangs des Vorratsbehälters mit dem ersten Anschlusses des ersten Teilsystems. Verbinden eines Druckeingangs des Vorratsbehälters mit dem unter dem Beschichtungsüberdruck stehenden ersten Druckfluid. Verbinden des zweiten Anschlusses des ersten Teilsystems mit dem unter dem Beschichtungsunterdruck stehenden zweiten Druckfluid. In einem zweiten Verfahrensschritt wird das erste Teilsystem über den ersten Anschluss des ersten Teilsystems mit dem unter dem Überdruck stehenden ersten Druckfluid und über den zweiten Anschluss des ersten Teilsystems gleichzeitig mit dem unter dem Unterdruck stehenden zweiten Druckfluid derart mit einer Differenzdruck beaufschlagt, dass zwischen dem ersten Anschluss des ersten Teilsystems und dem zweiten Anschluss des ersten Teilsystems in Richtung vom ersten Anschluss zum zweiten Anschluss ein Fluidstrom aus dem Beschichtungsmaterial und dem ersten Druckfluid derart durch das erste Teilsystem generiert wird, dass eine Innenwand des Teilsystems mit dem Beschichtungsmaterial beschichtet wird. Dabei wird, nachdem ein Austritt des Beschichtungsmaterials aus dem zweiten Anschluss des ersten Teilsystems an einem Kontrollpunkt detektiert wird, der zweite Anschluss des ersten Teilsystems mit dem unter dem Beschichtungsüberdruck stehenden ersten Druckfluid beaufschlagt.

Das heisst, auch beim Beschichten findet gemäss WO 2010/020272 A1 und WO 2010/020273 A1 das Prinzip der Umkehr der Druckdifferenz zwischen zwei Anschlüssen des Teilsystems Anwendung.

Obwohl die zuvor beschriebenen Vorbereitungsverfahren und das Beschichtungsverfahren die Sanierung von Rohrleitungssystemen regelrecht revolutioniert haben, hat sich dennoch gezeigt, dass es weiteren Verbesserungsbedarf gibt.

Wie bereits erwähnt, werden während der Vorbereitungsverfahren und insbesondere auch beim Beschichten Fluide, insbesondere das unter dem Überdruck stehende erste Arbeitsmedium benötigt, das in vielen Fällen unter einer erhöhten Temperatur bereitstehen müssen.

Im Stand der Technik wurde, wie bereits erwähnt, die Temperierung der Arbeitsmedien bisher dadurch gelöst, dass das Erste Arbeitsmedium zum Beispiel durch Verwendung eines Warmluftkompressors zentral erhitzt wurde, von dem aus dann das erwärmte erste Arbeitsmedium an die Hauptverteiler, Treppenhausverteiler und die Subverteiler zur Verwendung im Rohrleitungssystem wie beschrieben verteilt wurde. Der Nachteil einer solchen Lösung besteht einerseits natürlich darin, dass die Temperatur des im zentralen Warmluftkompressor erhitzten ersten Arbeitsmediums sehr stark vom Abstand zum Warmluftkompressor abhängt. Das heisst, an einem Teilsystem des Rohrleitungssystems, die weiter vom Warmluftkompressor entfernt sind, steht das unter dem Überdruck stehende Arbeitsmedium bei einer niedrigeren Temperatur zur Verfügung als an einem Teilsystem, das näher am Warmluftkompressor angeschlossen ist.

Zudem ist es schwierig einen absoluten Wert der Temperatur vorzugeben. Je nachdem wie hoch die Aussentemperatur ist, kühlt sich bei gegebener Entfernung zum Heissluftkompressor das erste Arbeitsmedium mehr oder weniger stark ab. Das heisst, im Sommer ist bei ansonsten gleicher Konfiguration an einer bestimmten Stelle die Temperatur des Arbeitsmediums eine andere als im Winter. Analoges gilt bei verschiedenen Luftfeuchtigkeiten. Luft mit hoher Luftfeuchtigkeit hat eine andere Wärmekapazität als trockene Luft und es kann damit in Abhängigkeit von der Luftfeuchtigkeit mehr oder weniger Wärme durch das erste Arbeitsmedium transportiert werden und die Abkühlrate der Luft ist unterschiedlich, so dass die Temperatur des ersten Arbeitsmediums an einem bestimmten Ort im Rohrleitungs- bzw. Zuleitungssystem auch z.B. von der Luftfeuchtigkeit abhängen kann.

Diese Effekte werden natürlich besonders gravierend, wenn sehr grosse, vor allem sehr hohe Gebäude saniert werden, da dann die Abstände zum zentralen Warmluftkompressor zunehmend grösser werden. Das kann zum Beispiel beim Entwässern und anschliessenden Trocknen des Rohrleitungssystems zu Problemen führen. So ist es z.B. möglich, dass in Rohrabschnitten, die relativ nahe am Kompressor sind eine gute Trocknung erfolgt, werden mit zunehmendem Abstand zum Warmluftkompressor die Rohrabschnitte zunehmend schlechter getrocknet werden. Dem kann zwar dadurch entgegengewirkt werden, dass die Temperatur der Druckluft auf einen sehr hohen Wert am Warmluftkompressor eingestellt wird, so dass die Druckluft auch noch am weitest entfernten Punkt genügend Wärme enthält um die entsprechenden Rohrabschnitte zuverlässig zu Trocknen. Allerdings führt das zu einem unnötig hohen Energieverbrauch beim Aufheizen der Druckluft da diese dann an den näher am Warmluftkompressor befindlichen Rohrabschnitten unnötig warm ist.

Aber selbst der Durchmesser der zu sanierenden Rohrleitungen hat einen entsprechenden Einfluss. Bei kleinerem Durchmesser der Rohre wird bei gleichem Druck am Kompressor der Luftmengenfluss verlangsamt was zu einem grösseren Wärmeverlust pro Rohrlänge führt, so dass sich die Luft in einem engen Rohr pro Rohrlänge mehr abkühlt, als in einem entsprechenden Rohr mit grösserem Durchmesser.

All das führt dazu, dass es bei den bekannten Verfahren und Vorrichtungen zur Rohrsanierung praktisch unmöglich ist, die Temperatur des ersten Arbeitsmediums an einem bestimmtem Ort ausreichend genau einzustellen. Das kann insbesondere bei dem innovativen Verfahren gemäss WO 2010/020272 A1 und WO 2010/020273 A1 ein gravierender Nachteil sein. Hier soll eigentlich unter im Wesentlichen gleichen Bedingungen ein Teilsystem des Rohrleitungssystems jeweils in umgekehrter Richtung unter möglichst gleichen Bedingungen mit dem unter dem Überdruck stehenden ersten Arbeitsmedium beaufschlagt werden. Wenn die beiden Anschlüsse des Teilsystems aber zum Beispiel relativ weit auseinander liegen ist es möglich, dass das Teilsystem beim Umkehren der Durchströmungsrichtung in Bezug auf die Temperatur des ersten Arbeitsmediums asymmetrisch beaufschlagt wird. Ist der erste Anschluss des Teilsystems zum Beispiel deutlich näher am Warmluftkompressor als der zweite Anschluss des Teilsystems, wird der entsprechende Rohrabschnitt auch entsprechend asymmetrisch temperiert, so dass z.B. die Trocknung des Rohrleitungssystems aber auch die Beschichtung des Rohrleitungssystems entsprechende Asymmetrien aufweisen kann.

Das alles kann insbesondere in Bezug auf den Beschichtungsvorgang zu gravierenden Nachteilen führen. Die Schichtqualität beim Beschichten, vor allem beim Beschichten mit Epoxidharz, kann empfindlich von den herrschenden Temperaturbedingungen abhängen. Wenn die Beschichtung z.B. bei zu niedriger oder zu hoher Temperatur stattfindet, oder wenn direkt nach dem Beschichten das aufgebrachte Material bei ungeeigneter Temperatur trocknet, kann es zu Mängeln in der Beschichtungsqualität kommt, im schlimmsten Fall zum Abbröckeln oder lokalen Beschädigungen in der Beschichtung, die sich leider oft erst später einstellen und eine sehr aufwändige nachträgliche Sanierung zur Folge haben können. Darüberhinaus kann es beim Beschichten relativ grosser Teilsysteme des Rohrleitungssystems dazu kommen, dass die Schichtqualität vom ersten Anschluss des Teilsystems zum zweiten Anschluss des Teilsystems stark variiert, weil die Temperatur des eingespeisten ersten Arbeitsmediums, wie oben beschrieben, unter anderem vom Abstand zum zentralen Heizgerät abhängt.

Ein analoges Problem ergibt sich, wenn ein Rohrleitungssystem eines sehr grossen oder sehr hohen Gebäudes saniert werden soll. Es ist dann fast unmöglich gleiche Temperaturbedingungen in den näher und weiter entfernten Rohrabschnitten herzustellen bzw. dies bedarf sehr aufwändiger Massnahmen, die zudem ständig angepasst werden müssen.

In der Praxis hat der Fachmann mit einer komplizierten Kombination der vorgenannten Probleme zu kämpfen, für die bisher keine effiziente und wirtschaftlich sinnvolle Lösung verfügbar ist.

Eine Aufgabe der Erfindung ist es daher, ein verbessertes Heizverfahren sowie einen verbesserten Verteiler, insbesondere Subverteiler vorzuschlagen, so dass die aus dem Stand der Technik beschriebenen Probleme vermieden werden und insbesondere eine zuverlässigere und gleichmässigere Rohrsanierung und Beschichtung des Inneren des Rohrleitungssystems ermöglicht wird.

Darüber hinaus ist es eine Aufgabe der Erfindung eine Vorrichtung bereitzustellen, mit welcher das Bearbeitungsverfahren und das Beschichtungsverfahren zuverlässig kostengünstig und einfach, möglichst sogar vollständig automatisiert durchgeführt werden kann.

Die diese Aufgaben lösenden Gegenstände der Erfindung sind durch die Merkmale des unabhängigen Anspruchs der jeweiligen Kategorie gekennzeichnet.

Die jeweiligen abhängigen Ansprüche beziehen sich auf besonders vorteilhafte Ausführungsformen der Erfindung.

Die Erfindung betrifft somit einen Subverteiler nach Anspruch 1. Wesentlich für die Erfindung ist somit, dass in der Überdruckkammer des Subverteilers ein Heizelement vorgesehen ist, so dass das unter Überdruck stehende Arbeitsmedium auf eine vorgegebene gewünschte Temperatur, in der Praxis zum Beispiel auf mindestens 45°C geheizt werden kann. Die richtige Temperatur hat zum Beispiel einen wesentlichen Einfluss auf die Epoxidharzvernetzung in der Beschichtung aus Epoxidharz, das während des Beschichtungsvorgangs auf das Innere des Rohrleitungssystems aufgebracht wird. In den meistens Fällen gilt, dass die Vernetzung des Harzes für die Beschichtung, im Speziellen die Vernetzung des Epoxidharzes umso schlechter ist, je tiefer die Temperatur ist, was insbesondere eine Haltbarkeit und Temperaturbeständigkeit der aufgebrachten Beschichtung negativ beeinflusst. Umgekehrt wird die Vernetzung der Harzbeschichtung, also insbesondere die Vernetzung der Beschichtung aus Epoxidharz umso besser je höher die Temperatur für das Aushärten der Schicht gewählt wird, wobei wie erwähnt in der Praxis sich eine Temperatur von mindestens 45°c oder eventuell höher als besonders vorteilhaft erwiesen hat.

Dadurch, dass das Beschichtungsmaterial über all mit der gleichen Temperatur in das Rohrleitungssystem einbringt ist es erstmals möglich eine gleichmässige einwandfreie Beschichtung von durchgängiger Qualität im gesamten Rohrleitungssystem zu erzeugen. Der Subverteiler nach der Erfindung umfasst weiter eine Unterdruckkammer mit einem Unterdruckeinlass zur Beaufschlagung der Unterdruckkammer mit einem unter einem Unterdruck stehenden zweiten Arbeitsmedium, wobei ein Unterdruckauslass zur Bereitstellung des zweiten Arbeitsmediums an einem zweiten Anschluss des Rohrleitungssystems vorgesehen ist.

Vorteilhaft ist dabei in der Praxis häufig eine Umschalteinrichtung vorgesehen, so dass eine mit dem Subverteiler verbundene Druckleitung mit dem ersten Arbeitsmedium und / oder mit dem zweiten Arbeitsmedium beaufschlagbar ist.

Besonders bevorzugt ist ein Temperaturcontroller vorgesehen, mit welchem das Heizelement derart steuerbar oder regelbar ist, dass die Temperatur des unter dem Überdruck stehenden ersten Arbeitsmediums auf den vorgebbaren Wert, z.B. auf eine Temperatur von 45°C oder höher eingestellt werden kann, so dass das Beschichtungsmaterial, insbesondere Epoxidharz unter optimalen Bedingungen zu ein Beschichtung höchster Qualität im Rohrinneren vernetzen kann. Der Temperaturcontroller ist dabei besonders vorteilhaft unmittelbar am Subverteiler vorgesehen und ist bevorzugt ein integraler Bestandteil des Subverteilers.

Dabei kann am Subverteiler ein Sensormittel zur Ermittlung eines Signals, insbesondere zur Bestimmung der Temperatur und / oder eines Drucks und / oder einer Schaltstellung des Absperrmittels und / oder eines anderen Betriebsparameters des Subverteilers und / oder des ersten Arbeitsmediums und / oder des zweiten Arbeitsmedium vorgesehen sein, und / oder der Subverteiler ist derart ausgestaltet und mit einer Signalverbindung, insbesondere mit einem elektrischen Anschluss versehen, dass das vom Sensormittel ermittelte Signal über die Signalverbindung in eine Steuerungsanlage einlesbar ist und / oder der Temperaturcontroller und / oder das Absperrmittel und / oder der Druck und / oder der andere Betriebsparameter des Subverteilers durch die Steuerungsanlage, bevorzugt automatisch und / oder programmgesteuert steuerbar oder regelbar ist.

Die Erfindung betrifft weiter ein Heizverfahren zum Heizen eines Inneren eines Rohrleitungssystems umfassend die Bereitstellung eines Subverteiler nach Anspruch 6, insbesondere Nasszellenverteiler mit einer Überdruckkammer mit einem Überdruckeinlass über welchen die Überdruckkammer mit einem unter einem Überdruck stehenden ersten Arbeitsmedium beaufschlagt wird, sowie einem Überdruckauslass mit welchem das erste Arbeitsmediums an einem ersten Anschluss des Rohrleitungssystems bereitgestellt wird, wobei erfindungsgemäss mittels eines in der Überdruckkammer vorgesehen Heizelements, insbesondere elektrisches Heizelement, eine Temperatur des unter dem Überdruck stehenden ersten Arbeitsmediums auf einen vorgegebenen Wert einstellt wird. Der Subverteiler umfasst zur Verwendung in einem erfindungsgemässen Heizverfahren weiterhin eine Unterdruckkammer mit einem Unterdruckeinlass umfasst, mit welchem die Unterdruckkammer mit einem unter einem Unterdruck stehenden zweiten Arbeitsmedium beaufschlagt wird, sowie einen Unterdruckauslass, mit welchem das zweite Arbeitsmediums an einem zweiten Anschluss des Rohrleitungssystems bereitgestellt wird.

Besonders vorteilhaft ist dabei eine Umschalteinrichtung vorgesehen ist, mit welcher eine mit dem Subverteiler verbundene Druckleitung mit dem ersten Arbeitsmedium und / oder mit dem zweiten Arbeitsmedium, bevorzugt alternativ beaufschlagt wird. Darüberhinaus wird besonders bevorzugt häufig ein Temperaturcontroller vorgesehen, der insbesondere unmittelbar am Subverteiler angeordnet sein kann und im Speziellen ein integraler Bestandteil des Subverteilers ist, wobei mittels des Temperaturcontrollers das Heizelement derart gesteuert oder geregelt wird, dass die Temperatur des unter dem Überdruck stehenden ersten Arbeitsmediums auf den vorgegebenen Wert, bevorzugt auf mindestens 45°C eingestellt wird.

Insbesondere um einen vollautomatisierten bzw. programmgesteuerten Betrieb des erfindungsgemässen Bearbeitungssystems zu gewährleisten, kann am Subverteiler oder an einer Verbindungsleitung zwischen Subverteiler und Rohrleitungssystem oder in einer anderen Leitung, die ein Arbeitsmedium fördert, oder auch am Temperaturcontroller ein Sensormittel zur Ermittlung eines Signals, insbesondere zur Bestimmung der Temperatur und / oder eines Drucks und / oder einer Schaltstellung des Absperrmittels und / oder eines anderen Betriebsparameters des Subverteilers und / oder des ersten Arbeitsmediums und / oder des zweiten Arbeitsmedium vorgesehen werden, und der Subverteiler kann bevorzugt derart ausgestaltet und mit Signalverbindung, insbesondere mit elektrischen Anschlüssen versehen werden, dass das vom Sensormittel ermittelte Signal über die Signalverbindung in eine Steuerungsanlage eingelesen wird und / oder der Temperaturcontroller und / oder das Absperrmittel und / oder der Druck und / oder der andere Betriebsparameter des Subverteilers durch die Steuerungsanlage, bevorzugt automatisch und / oder programmgesteuert gesteuert oder geregelt wird.

In der Praxis wird das Rohrleitungssystem in der Regel mit einer Mehrzahl von Subverteilern bearbeitet und mindestens ein erster und ein zweiter Subverteiler wird mit einem Heizelement und einem Temperaturcontroller ausgestattet, wobei die Temperatur eines jeden Subverteilers bevorzugt individuell gesteuert oder geregelt wird.

Im speziellen kann ein erfindungsgemässes Heizverfahren ein Reinigungsverfahren zum Reinigen des Inneren des Rohrleitungssystems, oder ein Strahlverfahren, insbesondere ein Sandstrahlverfahren zum Sandstrahlen des Inneren des Rohrleitungssystems, oder ein Trocknungsverfahren zum Trocknen des Inneren des Rohrleitungssystems, oder ein Beschichtungsverfahren zum Beschichten des Inneren des Rohrleitungssystems, insbesondere zum Beschichten mittels eines Epoxidharzes in Kombination umfassen.

Schliesslich betrifft die Erfindung auch ein Bearbeitungssystem zur Bearbeitung eines Rohrleitungssystems gemäss einem erfindungsgemässen Verfahren, wobei das Bearbeitungssystem einen Subverteiler der Erfindung zur Bereitstellung des unter dem Überdruck stehenden ersten Arbeitsmediums und des unter dem Unterdruck stehenden zweiten Arbeitsmediums an einem Anschluss eines Teilsystems in einem Subsystem umfasst, wobei das Bearbeitungssystem bevorzugt eine als Ausgangsperre ausgebildete Absperreinrichtung umfasst, so dass ein Ausgang des Rohrleitungssystems und / oder des Subsystems und / oder des Teilsystems zur Verhinderung eines Rückflusses eines Strahlmaterials und / oder eines Beschichtungsmaterials und / oder eines anderen Stoffes aus dem Teilsystem des Rohrleitungssystems absperrbar ist.

Im Folgenden wird die Erfindung anhand der schematischen Zeichnung an einigen exemplarischen Ausführungsbeispielen erläutert:
- Fig. 1: eine einfache Kaltwasserinstallation im Überblick;
- Fig. 2a-2b: schematisch ein neues Entleerungsverfahren mit anschliessender Trocknung;
- Fig. 3a-3b: schematisch ein neues Beschichtungsverfahren mit anschliessender Trocknung;
- Fig. 4a: ein erfindungsgemässer Subverteiler als Nasszellenverteiler mit Heizung;
- Fig. 4b: ein Schnitt durch den Nasszellenverteiler gemäss Fig. 4a.

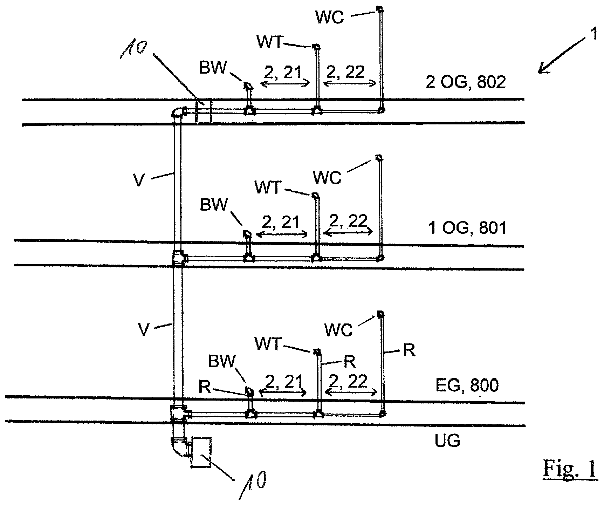

Zum besseren Verständnis der Erfindung wird im Folgenden anhand der Fig. 1 schematisch ein Rohrleitungssystems 1 anhand einer Kaltwasserinstallation 1 in einem Gebäude schematisch erläutert, in dem sich die Installation über vier Etagen erstreckt, nämlich über das Untergeschoss UG, das Erdgeschoss EG, das erste Obergeschoss 1OG und das zweite Obergeschoss 2OG.

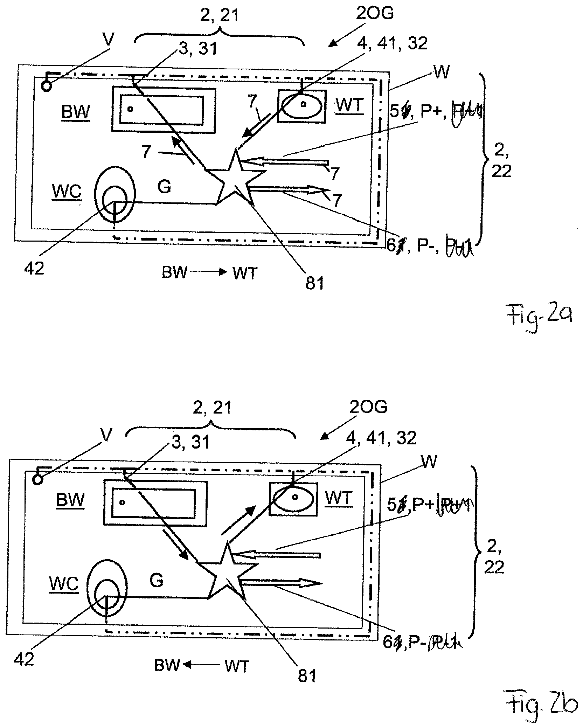

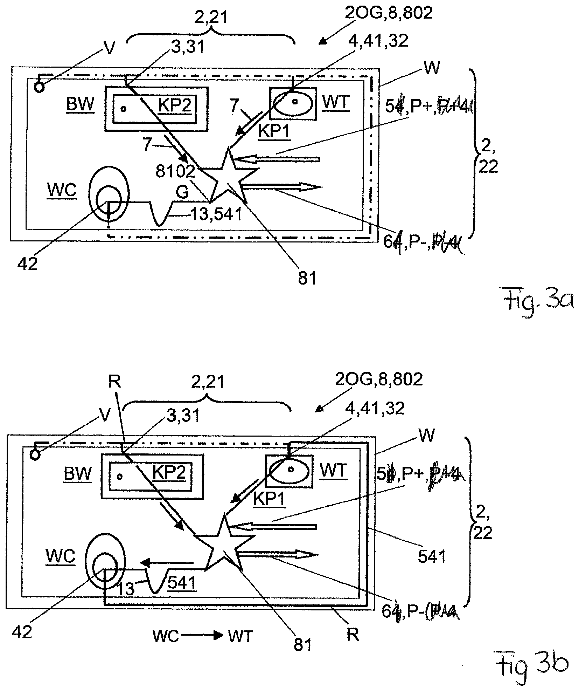

Die Fig. 2a und Fig. 2b sowie Fig. 3 und Fig. 3b zeigen beispielhaft für eine Entleerung mit anschliessender Trocknung bzw. für einen Beschichtungsvorgang wie ein erfindungsgemässer Subverteiler 81 vorteilhaft im Rohrleitungssystem vorgesehen werden kann. Bei diesen Ausführungsbeispielen wird der erfindungsgemässe Subverteiler in Kombination mit einem Entleerungs- bzw. Beschichtungsverfahren gemäss WO 2010/020272 A1 oder WO 2010/020273 A1 benutzt, wodurch diese aus dem Stand der Technik bekannte Verfahren entscheidend verbessert werden und damit je ein spezielles Ausführungsbeispiel eines Verfahrens der vorliegenden Erfindung schematisch beschreibt.

Es versteht sich von selbst, dass die Erfindung keineswegs allein auf die Sanierung von Kaltwasserinstallationen 1 in drei Etagen umfassenden Gebäuden beschränkt ist, sondern sich auch zum Beispiel auf die Sanierung von allen möglichen anderen Rohrleitungssystemen 1 bezieht, wie beispielsweise auf ein Warmwasserleitungssystem 1, ein Zirkulationsleitungssystem 1, ein Heizungsleitungssystem 1, insbesondere ein Fussbodenheizungssystem 1, ein Gasleitungssystem 1, ein Abwasserleitungssystem 1, ein Dachwasserleitungssystem 1, ein Schwimmbadleitungssystem 1, ein Druckluftleitungssystem 1, ein Ölverteilungssystem 1, wobei das Rohrleitungssystem 1 ein Rohrleitungssystem in Gebäuden mit beliebig vielen Etagen sein kann, oder z.B. ein Industrieleitungssystem 1, insbesondere ein Rohrleitungssystem 1 für Abwasser, Gas, Öl, Erdöl, Rohöl, Dieselöl, Benzin, Chemikalien, oder andere Industriegase, Industrieflüssigkeiten oder Industriefeststoffe ist und / oder wobei das Rohrleitungssystem 1 ein öffentliches Leitungssystem 1 zur Leitung eines der vorstehenden Fluide, anderer Fluide oder Feststoffe ist oder irgendein anderes zu sanierendes Rohrleistungssystem 1 ist. Ausserdem versteht es sich von selbst, dass die Erfindung nicht auf die nachfolgend rein exemplarisch beschriebenen speziellen Verfahren beschränkt ist. Vielmehr kommt es bei dem erfindungsgemässen Verfahren im Grundsatz lediglich darauf an, dass ein Subverteiler mit mindestens einer Überdruckkammer verwendet wird und in der Überdruckkammer ein Heizelement vorgesehen ist, so dass das unter dem Überdruck stehende Arbeitsmedium mit einer vorgebbaren Temperatur in das zu sanierende Rohrleitungsstück eingespiesen werden kann.

Die Kaltwasserinstallation 1 gemäss Fig. 1 erstreckt sich über vier Etagen eines Gebäudes, nämlich über das Untergeschoss UG, das Erdgeschoss EG, das erste Obergeschoss 1OG und das zweite Obergeschoss 2OG.

Die Kaltwasserinstallation 1 umfasst somit drei Subsysteme 8, 800, 801, 802, wobei das Subsystem 800 im Erdgeschoss EG, das Subsystem 801 im ersten Obergeschoss 1OG und das Subsystem 802 im zweiten Obergeschoss 2OG vorgesehen ist.

Zur Vereinfachung der Diskussion wurde ein relative einfaches Rohrleitungssystem 1 gewählt, bei welchem alle Subsystem 8, 800, 801, 802, im wesentlichen identisch sind und auf jeder Etage jeweils nur ein Badezimmer betreffen, wobei in jedem Badezimmer ein Abschluss für eine Badewanne BW, einen Waschtisch WT, und eine Toilette WC vorgesehen ist. Dabei versteht es sich von selbst, dass in der Realität eine ganze Reihe weiterer Anschlüsse in einem Subsystem 8, 800, 801, 802 vorgesehen sein können und die Subsysteme 8, 800, 801, 802 die mit dem erfindungsgemässen Verfahren bearbeitet werden können, müssen natürlich auch nicht identisch sein, sondern können auch teilweise oder alle verschieden sein.

Die Subsysteme 8, 800, 801, 802 sind in bekannter Weise über Vernetzungsleitungen V miteinander vernetzt, wobei im Fall der Kaltwasserinstallation 1 der Fig. 1 die Vernetzungsleitung V ein Steigrohr V ist, über das Kaltwasser den verschiedenen Subsystemen 8, 800, 801, 802 zugeführt wird, so dass Kaltwasser an den jeweiligen Zapfstellen der Badewanne BW, dem Waschtisch WT, und der Toilette WC zur Verfügung steht. Das zugehörige Abwassersystem ist übrigens aus Gründen der Übersichtlichkeit in Fig. 1 nicht dargestellt und könnte im Bedarfsfall selbstverständlich ebenfalls mit dem erfindungsgemässen Bearbeitungsverfahren saniert werden.

Die Subsysteme 8, 800, 801, 802 gemäss Fig. 1 umfassen jeweils ein erstes Teilsystem 2, 21, das im vorliegenden Beispiel durch die Rohrleitungen zwischen der Badewanne BW und dem Waschtisch WT definiert ist und ein zweites Teilsystem 2, 22, das im vorliegenden Beispiel durch die Rohrleitungen zwischen dem Waschtisch WT und der Toilette WC definiert ist. In Subsystemen 8, in denen noch weitere Anschlüsse vorgesehen sind, sind entsprechend zusätzliche Teilsysteme 2 definiert. Das Bearbeitungssystem mit Subverteilern 81, das zur Sanierung des Rohrleitungssystems 1 gemäss Fig. 1 verwendet wird, kann optional noch eine als Ausgangsperre 10 ausgebildete Absperreinrichtung umfassen, die mit einer Sammeleinrichtung zur Sammlung von Sand, Beschichtungsmaterial, Wasser oder anderen Rückständen aus dem Rohrleitungssystem 1 herrühren ausgestattet sein kann, so dass ein Ausgang des Rohrleitungssystems 1 und / oder des Subsystems 8, 801, 803 und / oder des Teilsystems 2, 21, 22 zur Verhinderung eines Rückflusses eines Strahlmaterials und / oder eines Beschichtungsmaterials und / oder eines anderen Stoffes absperrbar ist.

Anhand der Fig. 2a und 2b soll zunächst ein spezielles Ausführungsbeispiel eines erfindungsgemässen Entleerungsverfahren zur Entleerung eines Rohrleitungssystems 1 und anschliessender Trocknung mit Hilfe eines erfindungsgemässen Subverteilers 81 schematisch erläutert werden.

Die Fig. 3a und 3b erläutern ein spezielles Ausführungsbeispiel eines Beschichtungsverfahrens gemäss der Erfindung, bei welchem ebenfalls ein erfindungsgemässer Subverteiler 81 zum Einsatz kommt.

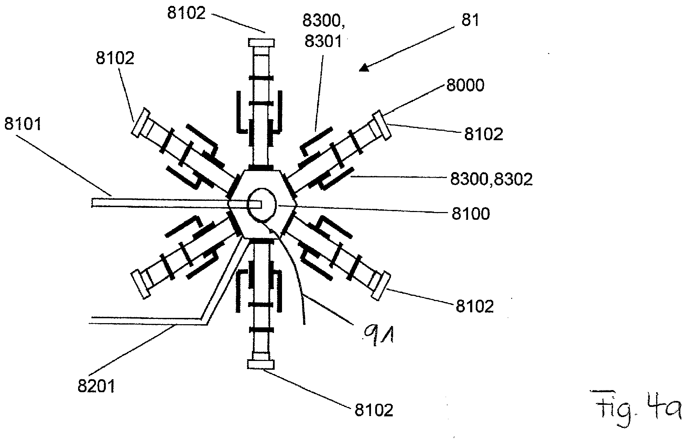

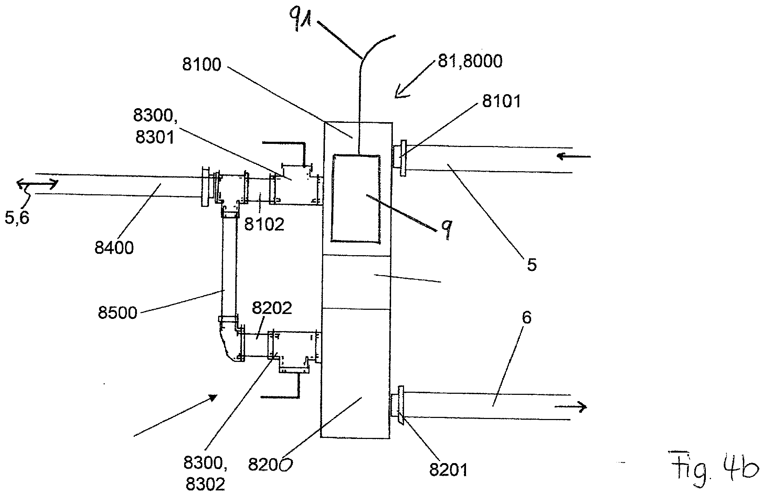

Der Subverteiler 81 gemäss Fig. 2a und 2b bzw. gemäss Fig. 3a und 3b ist hier ein Nasszellenverteiler zur Bearbeitung eines Inneren eines Rohrleitungssystems 1. Der Subverteiler umfasst, wie später noch anhand der Fig. 4a bzw. Fig. 4b genauer erläutert werden wird, eine Überdruckkammer 8100 mit einem Überdruckeinlass 8101 zur Beaufschlagung der Überdruckkammer 8100 mit einem unter einem Überdruck P₊ stehenden ersten Arbeitsmedium 5, sowie einen Überdruckauslass 8102 zur Bereitstellung des ersten Arbeitsmediums 5 an einem ersten Anschluss 3, 31, 32, 4, 41, 42 des Rohrleitungssystems 1. Gemäss der vorliegenden Erfindung ist in der Überdruckkammer 8100 ein Heizelement 9, insbesondere ein elektrisches Heizelement 9 vorgesehen ist, so dass eine Temperatur des unter dem Überdruck P₊ stehenden ersten Arbeitsmediums 5 auf einen vorgebbaren Wert einstellbar ist. Der Subverteiler 81 umfasst weiter eine Unterdruckkammer 8200 mit einem Unterdruckeinlass 8201 zur Beaufschlagung der Unterdruckkammer 8200 mit einem unter einem Unterdruck P₋ stehenden zweiten Arbeitsmedium 6 sowie einen Unterdruckauslass 8202 zur Bereitstellung des zweiten Arbeitsmediums 6, der an einem zweiten Anschluss 3, 31, 32, 4, 41, 42 des Rohrleitungssystems 1 angeschlossen ist.

Bezüglich der vorgenannten Details des Subverteilers 81, auf deren Darstellung in den Fig. 2a und 2b sowie Fig. 3a und 3b aus Gründen der Übersichtlichkeit verzichtet wurde, wird der Leser wie bereits erwähnt auf die Fig. 4a bzw. Fig. 4b verwiesen. Gemäss Fig. 2a werden zunächst alle Subverteiler 81 von einem oder mehreren hier nicht dargestellten Treppenhausluftverteilern mit dem unter dem Überdruck P₊ stehenden ersten Arbeitsmedium 5, das in diesem Beispiel einfach Druckluft 5 ist, beaufschlagt. Der Nasszellenluftverteiler 81 der Fig. 2a und 2b kann dabei an fünf verschiedene Anschlüsse 3, 4 gleichzeitig angeschlossen werden, wobei hier nur drei Anschlüsse verwendet werden. Selbstverständlich sind auch andere Nasszellenluftverteiler 81, die an mehr oder weniger als fünf Anschlüsse 3, 4 angeschlossen werden können vorteilhaft verwendbar.

Die Austrocknung beginnt bei einem mehrstöckigen Gebäude bevorzugt beim obersten Stockwerk und wird dann sukzessive abwärts bis zum untersten Stockwerk durchgeführt. Beim Beispiel der Fig. 2a und Fig. 2b beginnt das Vorbereitungsverfahren zur Entleerung und Trocknung des Rohrleitungssystem 1 im 2OG des Gebäudes, welches das oberste Stockwerk des Gebäudes ist.

In einem ersten Schritt werden gemäss Fig. 2a zunächst der erste Anschluss 31 der Badewanne BW mit dem unter dem Vorbereitungsüberdruck P₊ stehenden ersten Arbeitsmedium 5 beaufschlagt und der zweite Anschluss 41 wird mit dem unter dem Vorbereitungsunterdruck P₋ stehenden zweiten Arbeitsmedium 6 beaufschlagt, welches zweite Arbeitsmedium 6 ebenfalls bevorzugt einfach Luft ist, das unter einem Unterdruck steht, der zum Beispiel von einer hier nicht dargestellten Absaugmaschine erzeugt wird.

Der Anschluss 42 der Toilette WC ist dagegen gesperrt, wie durch den Buchstaben G gekennzeichnet.

Dabei bedeutet allgemein im Folgenden, dass ein Anschluss der mit einem G gekennzeichnet ist, gesperrt ist. Das heisst, der Anschluss ist zum Beispiel mittels eines Absperrmittels 8300, 8301, 8302 derart abgesperrt, dass der entsprechende Anschluss des Rohrleitungssystems 1 bzw. die entsprechende Kammer des Subverteilers 81 weder von dem ersten Arbeitsmedium 5 noch von dem zweiten Arbeitsmedium 6 über den Anschluss beaufschlagt ist.

Im ersten Schritt gemäss Fig. 2a wird also das erste Teilsystem 2, 21 zumindest teilweise von einem Prozessstoff befreit, zum Beispiel von dem Prozessstoff das Wasser, das im Betriebszustand des Rohrleitungssystems 1 durch das Rohrleitungssystem 1 zirkuliert. So entfernter Prozessstoff wird über den Nasszellenverteiler 81 und den Treppenhausverteiler abgesaugt und zum Beispiel in einem Abscheider abgeschieden und geeignet entsorgt. Die Pfeile in allen Figuren geben dabei die Richtung des Fluidstroms 7 im Rohrleitungssystem 1 an.

Sodann wird gemäss Fig. 2b die Richtung der Strömung des Fluidstroms 7 der Arbeitsmedien 5, 6 im ersten Teilsystem 2, 21 umgekehrt, in dem jetzt der zweite Anschluss 41 des ersten Teilsystems 2, 21 mit dem unter dem Überdruck P₊ stehenden ersten Arbeitsmedium 5 beaufschlagt wird, während gleichzeitig der erste Anschluss 31 des ersten Teilsystems 2, 21 mit dem unter dem Unterdruck P₋ stehenden zweiten Arbeitsmedium 6 beaufschlagt wird.

Dadurch, dass das Teilsystem 2, 21 jeweils in zwei entgegen gesetzten Richtungen vom Arbeitsmedium 5, 6 durchströmt wird, kann das Rohrleitungssystem 1 besonders effektiv entleert bzw. getrocknet werden. Insbesondere Prozessstoffe, wie z.B. Wasser, das sich z.B. beim Entleeren des Rohrleitungssystems 1 an einer Biegung des Rohrsystems 1 festsetzen und daher nicht entfernt werden kann, wenn das Rohrleitungssystem 1 nur in einer Richtung entleert wird, können beim Durchspülen mit dem Vorbereitungsmedium 5, 6 in entgegen gesetzter Richtung dann in die entgegen gesetzte Richtung aus dem Rohrleitungssystem 1 ausgetragen werden.

Dieses aus WO 2010/020272 A1 und WO 2010/020273 A1 an sich bekannte Entleerungs- und Trocknungsverfahren wird durch die vorliegende Erfindung entscheidend verbessert. Dadurch, dass erfindungsgemäss in der Überdruckkammer 8100 das Heizelement 9 vorgesehen ist, mit welchem das erste Arbeitsmedium 5 direkt in der Überdruckkammer 8100 auf die notwendige vorgegebene Temperatur aufgeheizt werden kann, steht nunmehr an den Anschlüssen 3, 31, 4, 41, 32 des Teilsystems 2, 21 das erste Arbeitsmedium 5 immer im Wesentlichen mit derselben Temperatur zur Verfügung, so dass das Teilsystem 2, 21 symmetrisch temperiert wird und damit erstmals gewährleistet ist, dass das Teilsystem auch symmetrisch sauber entleert und getrocknet wird.

Da alle im ganzen Haus installierten Subverteiler 81 über eine entsprechende Heizung verfügen, ist nicht nur jedes Teilsystem 2, 21 symmetrisch zuverlässig entleert und getrocknet, sondern alle Teilsysteme 2, 21 des gesamten Rohrleitungssystems 1 sind unter identischen Bedingungen mit dem ersten Arbeitsmedium 5 beaufschlagt worden, so dass alle Teilsysteme 2, 21 im wesentlichen identisch entleert und getrocknet sind, so dass erstmals die Herstellung eines einheitlichen Zustands des gesamten Rohrleitungssystems 1 nach dem Entleeren und Trocknen möglich ist und damit sozusagen ein einheitlicher Qualitätsstandard über das gesamte Rohrleitungssystem 1 gewährleistet werden kann.

Um die Heizleistung der Subverteiler 81 zu unterstützen ist es darüber hinaus möglich, dass auch die Treppenhausverteiler, die im einfachsten Fall baugleich zu den Subverteilern 81 sind, ebenfalls über eine Heizung verfügen, so dass das Arbeitsmedium 5 bereits vorgeheizt am Subverteiler 81 angeliefert wird, wodurch die Heizung des Subverteilers vor allem bei grossen Durchflussraten des Arbeitsmediums 5 vorteilhaft unterstützt wird.

Nicht notwendiger weise aber unter bestimmten Umständen ist es dabei möglich, dass am Ende das gesamte Rohrleitungssystem 1 noch für eine vorgegebene Zeitdauer, z.B. für fünf Minuten unter Druck gehalten, und anschliessend mittels Warmluft das gesamte entleerte Rohrleitungssystem 1 noch zusätzlich beaufschlagt wird. Das zusätzliche Austrocknen mit Warmluft kann je nach Umständen zum Beispiel bei über 37°C und zum Beispiel ca. 45 min. dauern. Danach wird das gesamte Rohrleitungssystem 1 drucklos gestellt und das Rohrleitungssystem 1 ist bereit zum Reinigen, z.B. durch Sandstrahlen.

Wie bereits oben erwähnt, besteht ein Problem beim Beschichten von Rohrleitungssystemen 1 von Gebäuden häufig darin, dass keine Pläne für das Rohrleitungssystem 1 existieren. Und selbst wenn solche Pläne existieren, sind die Rohre R oft anders als auf den Plänen angegeben verlegt. Bei den meisten bekannten Beschichtungsverfahren kann dies, wie weiter oben ausführlich erläutert zur Folge haben, dass Rohrabschnitte nicht beschichtet werden, oder aus Unkenntnis des Leitungsverlaufes zu viel Epoxydharz in die Rohre R eingegeben wird, was zur Reduzierung oder sogar zur Verstopfung der Rohrleitungen R führen kann.

Bei korrekter Verwendung des Beschichtungsverfahrens gemäss Fig. 3a und 3b, das an sich aus der WO 2010/020272 A1 und WO 2010/020273 A1 bereits bekannt ist, sind solche Fehler grundsätzlich nicht möglich, da dieses Verfahren quasi automatisch und kontrolliert zu einer exakten Beschichtung des gesamten Rohleitungssystems 1 führt.

Um dies zu demonstrieren, wird im Folgenden anhand der Fig. 3a bis Fig. 3b ein bevorzugtes Ausführungsbeispiel eines erfindungsgemässen Heizverfahrens exemplarisch eingehend beschrieben, das für die Praxis von besonderer Bedeutung ist und letztlich das Verfahren gemäss WO 2010/020272 A1 und WO 2010/020273 A1 durch Verwendung eines erfindungsgemässen Subverteilers 81 verbessert.

Die Beschichtung des Rohrsystems 1 beginnt bevorzugt, aber nicht zwingend in der obersten Etage des Gebäudes, im vorliegenden Beispiel im zweiten Obergeschoss 2OG.

Vor dem eigentlichen Start des erfindungsgemässen Beschichtungsverfahrens wird zunächst ein Vorratsbehälter 13, bevorzugt ein Vorratsschlauch 13 mit Beschichtungsmaterial 541, im vorliegenden Beispiel mit Epoxidharz 541 zwischen dem Anschluss 42 an der Toilette WC und einem Überdruckauslass 8102 an dem als Nasszellenverteiler 81 eingesetzten Subverteiler 81 vorgesehen. Zunächst ist die Verbindung zum Anschluss 42 noch gesperrt, so dass der Vorratsschlauch 13 noch nicht mit dem unter dem Überdruck P₊ stehenden ersten Arbeitsmedium 5 beaufschlagt ist. Die beiden anderen Anschlüsse 3, 31, 4, 41, 32 werden über den Nasszellenverteiler 81 mit dem unter dem Unterdruck P₋ stehenden zweiten Arbeitsmedium 6 beaufschlagt, wie die Pfeile 7 andeuten.

Nach diesen vorbereitenden Massnahmen kann das eigentliche Beschichtungsverfahren gestartet werden.

Gemäss Fig. 3b wird nun der Vorratsbehälter 13, enthaltend das Beschichtungsmaterial 541 dem ersten Druckfluid 54 mit dem Beschichtungsüberdruck P₊ ausgesetzt, so dass das Beschichtungsmaterial über den Anschluss 42 in das zweite Teilsystem 2, 22 gepresst bzw. eingeblasen wird und die Innenwand des Rohrs R in an sich bekannter Weise mit dem Beschichtungsmaterial 541 beschichtet wird. Gleichzeitig ist am Anschluss 3, 31 an der Badewanne BW und am Anschluss 4, 41, 32 am Waschtisch WT der Beschichtungsunterdruck P₋ wirksam, so dass einerseits das Einblasen des Beschichtungsmaterials 541 über den Anschluss 42 an der Toilette WC durch Saugen unterstützt wird und andererseits die noch nicht zu beschichtenden Rohrabschnitte R von unerwünschten Stoffen, z.B. von Gasen oder Tropfen des Beschichtungsmaterials, eventuell noch vorhandenem Schmutz und anderem unerwünschtem Stoffen befreit werden, die dann über den Nasszellenverteiler 81 und den Treppenhausverteiler abgesaugt und zum Beispiel in einem Abscheider 12 oder einem Zyklonabscheider 121 abgeschieden und geeignet entsorgt werden. Die Pfeile in allen Figuren geben dabei wie üblich die Richtung des Fluidstroms 7 im Rohrleitungssystem 1 an.

Am Anschluss 4, 41, 32 am Waschtisch WT ist ein erster Kontrollpunkt KP1 vorgesehen, an welchem mittels eines Detektionsmittels kontrolliert bzw. detektiert wird, wenn das Beschichtungsmaterial 541 am Anschluss 4, 41, 32 austritt bzw. den ersten Kontrollpunkt KP1 erreicht. Das Detektionsmittel kann z.B. ein beliebiger elektronischer Sensor sein, der geeignet ist das Beschichtungsmaterial sicher zu detektieren. Z.B. ein optischer Sensor, ein Ultraschallsensor, ein kapazitiver oder induktiver Sensor, ein Leitfähigkeitssensor oder ein beliebiger anderer Sensor sein. Wenn keine vollständige Automatisierung des erfindungsgemässen Verfahrens notwendig ist, kann das Detektionsmittel auch einfach ein Stück transparenter Schlauch sein, so dass eine am ersten Kontrollpunkt KP1 platzierte Person das Austreten des Beschichtungsmaterials am Anschluss 4, 41, 32 kontrollieren und die weiteren Verfahrensschritte einleiten kann.

An dieser Stelle sei ausdrücklich darauf hingewiesen, dass ein erfindungsgemässes Heizverfahren auch vollständig automatisiert werden kann. Und zwar nicht nur beim Beschichten, sondern beginnend mit dem Entleeren, Trocknen, Sandstrahlen, Entstauben und schliesslich dem abschliessenden Beschichten, ist der gesamte Verfahrensablauf von Anfang bis Ende automatisierbar, wenn nur an den entsprechenden Stellen der erfindungsgemässen Arbeitsvorrichtung die an sich frei erhältlichen, bzw. mit dem Wissen des Fachmanns relativ einfach herstellbaren notwendigen Detektoren, automatischen Ventile und Umschaltvorrichtungen und weitere automatisch bedienbare Komponenten verwendet werden. Der Fachmann versteht sofort, um welche notwendigen automatisch bedienbaren Systemkomponenten es sich handelt und an welchen Stellen im System sie vorgesehen werden müssen. Werden diese Systemkomponenten geeignet mit einer Steuerung und / oder Regelung, bevorzugt umfassend eine elektronische Datenverarbeitungsanlage verbunden, lassen sich alle im Rahmen dieser Anmeldung beschriebenen Verfahren entweder einzeln oder in jedweder Kombination vollautomatisch durchführen, wodurch in enormem Umfang Personal und damit Kosten eingespart werden. Ausserdem werden dadurch Fehler durch das Bedienungspersonal nahezu vollständig ausgeschlossen.

Nachdem am ersten Kontrollpunkt KP1 das Austreten des Beschichtungsmaterial 541 festgestellt wird, ist sichergestellt, dass das zweite Teilsystem 2, 22, das heisst der Rohrabschnitt R zwischen dem Anschluss 42 der Toilette WC und dem Anschluss 4, 41, 32 vollständig beschichtet ist.

Auf die weitere Beschichtung des Teilsystems 2, 21 zwischen dem Anschluss 4, 41, 32 des Waschtischs WT und dem Anschluss 3, 31 der Badewanne BW, wo ein zweiter Kontrollpunkt KP2 vorgesehen ist, sowie die Beschichtung der restlichen Teile des Rohrleitungssystems kann auf die WO 2010/020272 A1 und WO 2010/020273 A1 verwiesen werden, da diese weiteren Verfahrensschritte zum grundlegenden Verständnis der vorliegenden Erfindung nicht von besonderer Bedeutung sind.

Wesentlich für die zuvor anhand der Fig. 3a und 3b beschriebene Beschichtung des Rohrleitungssystems 1 ist, dass durch die Verwendung des erfindungsgemässen Subverteilers 81 ein neues Heizverfahren geschaffen wurde. Da bei dem erfindungsgemässen Subverteiler 81 in der Überdruckkammer 8100 das Heizelement 9 vorgesehen ist, mit welchem das erste Arbeitsmedium 5 direkt in der Überdruckkammer 8100 auf die notwendige vorgegebene Temperatur aufgeheizt werden kann, steht nunmehr an den Anschlüssen 3, 31, 4, 41, 32 des Teilsystems 2, 21 das erste Arbeitsmedium 5 immer mit derselben Temperatur zur Verfügung, so dass das Teilsystem 2, 21 symmetrisch temperiert wird und damit erstmals gewährleistet ist, dass das Beschichtungsmaterial an den inneren Rohrwänden des beschichteten Teilsystems 2, 21 auch symmetrisch und bei der vorgegebenen optimalen Temperatur zuverlässig austrocknen kann, ohne dass der beschichtete Rohrabschnitt asymmetrisch temperiert, so dass z.B. die Trocknung des Rohrleitungssystems aber auch die Beschichtung des Rohrleitungssystems nicht mehr die aus dem Stand der Technik bekannten Asymmetrien aufweist.

Damit können erstmals die aus dem Stand der Technik bekannten gravierenden Nachteile zuverlässig vermieden werden. Die Schichtqualität beim Beschichten, vor allem beim Beschichten mit Epoxidharz, kann nämlich wie bereits erläutert empfindlich von den herrschenden Temperaturbedingungen abhängen. Wenn die Beschichtung z.B. bei zu niedriger oder zu hoher Temperatur stattfindet, oder wenn direkt nach dem Beschichten das aufgebrachte Material bei ungeeigneter Temperatur trocknet, kann es zu Mängeln in der Beschichtungsqualität kommt, im schlimmsten Fall zum Abbröckeln oder lokalen Beschädigungen in der Beschichtung, die sich leider oft erst später einstellen und eine sehr aufwändige nachträgliche Sanierung zur Folge haben können. Darüberhinaus kann es beim Beschichten relativ grosser Teilsysteme des Rohrleitungssystems dazu kommen, dass die Schichtqualität vom ersten Anschluss des Teilsystems zum zweiten Anschluss des Teilsystems stark variiert, weil die Temperatur des eingespeisten ersten Arbeitsmediums, wie oben beschrieben, unter anderem vom Abstand zum zentralen Heizgerät abhängt.

All diese Probleme und Nachteile werden durch die vorliegende Erfindung erstmals erfolgreich und zuverlässig vermieden, da durch die Verwendung des erfindungsgemässe Subverteilers das erste Arbeitsmedium immer zuverlässig mit der gewünschten Temperatur in das Rohrleitungssystem eingespeist werden kann, so dass ein völlig gleichmässiges Trocknen des Beschichtungsmaterials gewährleistet werden kann und dies bei einer optimal einstellbaren Temperatur, bei welcher ein gegebenes Beschichtungsmaterial optimal trocknet und auf der Innenwand des Rohrleitungssystems abbindet.

Auch die Beschichtung eines Rohrleitungssystems in einem sehr grossen oder sehr hohen Gebäudes ist nunmehr problemlos und zuverlässig möglich. Da alle im ganzen Haus installierten Subverteiler über eine entsprechende Heizung verfügen, ist nicht nur jedes Teilsystem symmetrisch zuverlässig temperierbar, sondern alle Teilsysteme des gesamten Rohrleitungssystems sind unter identischen Bedingungen mit dem ersten Arbeitsmedium beaufschlagbar, so dass alle Teilsysteme im wesentlichen identisch beschichtet sind, so dass erstmals die Herstellung einer einheitlichen, sehr hochwertigen Beschichtungsqualität des gesamten Rohrleitungssystems gewährleistet werden kann.

Die Fig. 4a und Fig. 4b zeigen schliesslich ein besonders bevorzugtes Ausführungsbeispiel eines erfindungsgemässen Subverteilers 81, der im Speziellen ein Nasszellenverteiler ist, und im folgenden im Detail beschrieben werden wird. Die Fig. 4b zeigt dabei einen Schnitt durch eine Anschlussgruppe 8000 gemäss Fig. 4a. Der Subverteiler im Beispiel gemäss Fig. 4a umfasst eine Überdruckkammer 8100 mit einem Überdruckeinlass 8101 zur Beaufschlagung der Überdruckkammer 8100 im Betriebszustand mit dem unter einem Überdruck P₊ stehenden ersten Arbeitsmedium 5 sowie eine Unterdruckkammer 8200, die in der Aufsicht gemäss Fig. 4a hier nicht zu erkennen ist, und mit einem Unterdruckeinlass 8201 zur Beaufschlagung der Unterdruckkammer 8200 mit einem unter einem Unterdruck P₋ stehenden zweiten Arbeitsmedium 6 versehen ist.

Vorgesehen sind in dem speziellen Ausführungsbeispiel gemäss Fig. 4a bzw. Fig. 4b insgesamt sechs gleichberechtigte Anschlussgruppen 8000 zum Anschluss an ein Teilsystem 2, 21, 22 wie oben beschrieben. Jede Anschlussgruppe 8000 umfasst einen Überdruckauslass 8102 zur Bereitstellung des ersten Arbeitsmediums 5 an einem Anschluss 3, 31, 32, 4, 41, 42 eines Teilsystems 2, 21, 22 in einem Subsystem 8, 800, 801, 802, und einen Unterdruckauslass 8202 zur Bereitstellung des zweiten Arbeitsmediums 6 an einem Anschluss 3, 31, 32, 4, 41, 42 des Teilsystems 2, 21, 22 im Subsystem 8, 800 801, 802. Weiter ist eine Umschalteinrichtung 8300 vorgesehen, die im vorliegenden Beispiel durch mechanische Absperrhähne 8300, 8301, 8302 in Kombination mit einem gemeinsamen Auslassstutzen 8500 realisiert ist, wie am besten der Fig. 4b entnommen werden kann. Durch die Umschalteinrichtung 8300 kann eine mit dem Subverteiler 81 verbundene Druckleitung 8400 wahlweise mit dem ersten Arbeitsmedium 5 oder mit dem zweiten Arbeitsmedium 6 beaufschlagt werden.

Erfindungsgemäss ist in der Überdruckkammer 8100 ein Heizelement 9 vorgesehen, dass im vorliegenden Beispiel in Form einer elektrischen Heizung ausgestaltet ist, die über eine Signalverbindung 91 sowohl gegebenenfalls gesteuert oder geregelt werden kann, als auch mit der notwenigen elektrischen Heizenergie versorgt werden kann. Durch das elektrische Heizelement 9 kann eine Temperatur des unter dem Überdruck P₊ stehenden ersten Arbeitsmediums 5 wie weiter oben eingehend beschrieben worden ist auf einen vorgebbaren Wert eingestellt werden.

## Patentansprüche

1. Subverteiler, insbesondere Nasszellenverteiler zur Bearbeitung eines Inneren eines Rohrleitungssystems (1), umfassend:
- eine Überdruckkammer (8100) mit einem Überdruckeinlass (8101) zur Beaufschlagung der Überdruckkammer (8100) mit einem unter einem Überdruck (P₊) stehenden ersten Arbeitsmedium (5), sowie
- einen Überdruckauslass (8102) zur Bereitstellung des ersten Arbeitsmediums (5) an einem ersten Anschluss (3, 31, 32, 4, 41, 42) des Rohrleitungssystems (1), und:
- eine Unterdruckkammer (8200) mit einem Unterdruckeinlass (8201) zur Beaufschlagung der Unterdruckkammer mit einem unter einem Unterdruck (P₋) stehenden zweiten Arbeitsmedium (6), sowie
- einen Unterdruckauslass (8202) zur Bereitstellung des zweiten Arbeitsmediums (6) an einem zweiten Anschluss (3, 31, 32, 4, 41, 42) des Rohrleitungssystems (1) vorgesehen ist, wobei
in der Überdruckkammer ein Heizelement (9), insbesondere ein elektrisches Heizelement (9) vorgesehen ist, so dass eine Temperatur des unter dem Überdruck (P₊) stehenden ersten Arbeitsmediums (5) auf einen vorgebbaren Wert einstellbar ist, **dadurch gekennzeichnet, dass** der Überdruckauslass (8102) und der Unterdruckauslass (8202) mit einem gemeinsamen Auslassstutzen (8500) verbunden sind, und dass der Überdruckeinlass (8101) und / oder der Unterdruckeinlass (8201) und / oder der Überdruckauslass (8102) und / oder der Unterdruckauslass (8202) jeweils separat mit einem Absperrmittel (8300, 8301, 8302), insbesondere mit einem mechanischen Absperrhahn (8300, 8301, 8302), im speziellen mit einem automatischen Ventil (8300, 8301, 8302), bevorzugt mit einem elektrisch betätigbaren Ventil (8300, 8301, 8302) absperrbar ist.

2. Subverteiler nach Anspruch 1, wobei eine Umschalteinrichtung (8300) vorgesehen ist, so dass eine mit dem Subverteiler (81) verbundene Druckleitung (8400) mit dem ersten Arbeitsmedium (5) und / oder mit dem zweiten Arbeitsmedium (6) beaufschlagbar ist.

3. Subverteiler nach einem der vorangehenden Ansprüche, wobei ein Temperaturcontroller vorgesehen ist, mit welcher das Heizelement derart steuerbar oder regelbar ist, dass die Temperatur des unter dem Überdruck (P₊) stehenden ersten Arbeitsmediums (5) auf den vorgebbaren Wert einstellbar ist.

4. Subverteiler nach Anspruch 3, wobei der Temperaturcontroller unmittelbar am Subverteiler vorgesehen ist und bevorzugt ein integraler Bestandteil des Subverteilers ist.

5. Subverteiler nach einem der vorangehenden Ansprüche, wobei am Subverteiler ein Sensormittel zur Ermittlung eines Signals, insbesondere zur Bestimmung der Temperatur und / oder eines Drucks und / oder einer Schaltstellung des Absperrmittels (8300, 8301, 8302) und / oder eines anderen Betriebsparameters des Subverteilers und / oder des ersten Arbeitsmediums (5) und / oder des zweiten Arbeitsmedium (6) vorgesehen ist, und / oder wobei der Subverteiler derart ausgestaltet und mit einer Signalverbindung, insbesondere mit einem elektrischen Anschluss versehen ist, dass das vom Sensormittel ermittelte Signal über die Signalverbindung in eine Steuerungsanlage einlesbar ist und / oder der Temperaturcontroller und / oder das Absperrmittel (8300, 8301, 8302) und / oder der Druck und / oder der andere Betriebsparameter des Subverteilers durch die Steuerungsanlage, bevorzugt automatisch und / oder programmgesteuert steuerbar oder regelbar ist.

6. Heizverfahren zum Heizen eines Inneren eines Rohrleitungssystems (1) umfassend die Bereitstellung eines Subverteiler, insbesondere Nasszellenverteiler
- mit einer Überdruckkammer (8100) mit einem Überdruckeinlass (8101) über welchen
die Überdruckkammer (8100) mit einem unter einem Überdruck (P₊) stehenden ersten Arbeitsmedium (5) beaufschlagt wird, sowie
- einem Überdruckauslass (8102) mit welchem das erste Arbeitsmediums (5) an einem ersten Anschluss (3, 31, 32, 4, 41, 42) des Rohrleitungssystems bereitgestellt wird, und:
- eine Unterdruckkammer (8200) mit einem Unterdruckeinlass (8201) zur Beaufschlagung der Unterdruckkammer mit einem unter einem Unterdruck (P₋) stehenden zweiten Arbeitsmedium (6), sowie
- einen Unterdruckauslass (8202) zur Bereitstellung des zweiten Arbeitsmediums (6) an einem zweiten Anschluss (3, 31, 32, 4, 41, 42) des Rohrleitungssystems (1) bereitgestellt wird, wobei
mittels eines in der Überdruckkammer vorgesehen Heizelements (9), insbesondere elektrisches Heizelement (9), eine Temperatur des unter dem Überdruck (P₊) stehenden ersten Arbeitsmediums (5) auf einen vorgegebenen Wert einstellt wird, **dadurch gekennzeichnet, dass** der Überdruckauslass (8102) und der Unterdruckauslass (8202) mit einem gemeinsamen Auslassstutzen (8500) verbunden sind, und dass der Überdruckeinlass (8101) und / oder der Unterdruckeinlass (8201) und / oder der Überdruckauslass (8102) und / oder der Unterdruckauslass (8202) jeweils separat mit einem Absperrmittel (8300, 8301, 8302), insbesondere mit einem mechanischen Absperrhahn (8300, 8301, 8302), im speziellen mit einem automatischen Ventil (8300, 8301, 8302), bevorzugt mit einem elektrisch betätigbaren Ventil (8300, 8301, 8302) absperrbar ist.

7. Heizverfahren nach Anspruch 6, wobei eine Umschalteinrichtung (8300) vorgesehen ist, und eine mit dem Subverteiler (81) verbundene Druckleitung (8400) mit dem ersten Arbeitsmedium (5, 51, 52, 53, 54) und / oder mit dem zweiten Arbeitsmedium (6, 61, 62, 63, 64), bevorzugt alternativ beaufschlagt wird.

8. Heizverfahren nach einem der Ansprüche 6 oder 7, wobei ein Temperaturcontroller vorgesehen wird, der bevorzugt unmittelbar am Subverteiler (81) angeordnet ist und im Speziellen ein integraler Bestandteil des Subverteilers (81) ist, und mittels des Temperaturcontrollers das Heizelement (9) derart gesteuert oder geregelt wird, dass die Temperatur des unter dem Überdruck (P₊) stehenden ersten Arbeitsmediums (5) auf den vorgegebenen Wert, bevorzugt auf mindestens 45°C eingestellt wird.

9. Heizverfahren nach einem der Ansprüche 6 bis 8, wobei am Subverteiler ein Sensormittel zur Ermittlung eines Signals, insbesondere zur Bestimmung der Temperatur und / oder eines Drucks und / oder einer Schaltstellung des Absperrmittels (8300, 8301, 8302) und / oder eines anderen Betriebsparameters des Subverteilers und / oder des ersten Arbeitsmediums (5) und / oder des zweiten Arbeitsmedium (6) vorgesehen wird, und der Subverteiler bevorzugt derart ausgestaltet und mit Signalverbindung, insbesondere mit elektrischen Anschlüssen versehen wird, dass das vom Sensormittel ermittelte Signal über die Signalverbindung in eine Steuerungsanlage eingelesen wird und / oder der Temperaturcontroller und / oder das Absperrmittel (8300, 8301, 8302) und / oder der Druck und / oder der andere Betriebsparameter des Subverteilers durch die Steuerungsanlage, bevorzugt automatisch und / oder programmgesteuert gesteuert oder geregelt wird.

10. Heizverfahren nach einem der Ansprüche 6 bis 9, wobei das Rohrleitungssystem (1) mit einer Mehrzahl von Subverteilern (81) bearbeitet wird und mindestens ein erster und ein zweiter Subverteiler (81) mit einem Heizelement (9) und einem Temperaturcontroller ausgestattet wird und die Temperatur eines jeden Subverteilers (81) individuell gesteuert oder geregelt wird.

11. Heizverfahren nach einem der Ansprüche 6 bis 10, wobei das Heizverfahren ein Reinigungsverfahren zum Reinigen des Inneren des Rohrleitungssystems (1), oder ein Strahlverfahren, insbesondere ein Sandstrahlverfahren zum Sandstrahlen des Inneren des Rohrleitungssystems (1), oder ein Trocknungsverfahren zum Trocknen des Inneren des Rohrleitungssystems (1), oder ein Beschichtungsverfahren zum Beschichten des Inneren des Rohrleitungssystems (1), insbesondere zum Beschichten mittels eines Epoxidharzes in Kombination umfasst.

12. Bearbeitungssystem zur Bearbeitung eines Rohrleitungssystems (1) gemäss einem Verfahren nach einem der Ansprüche 6 bis 11, wobei das Bearbeitungssystem einen Subverteiler (81) nach einem der Ansprüche 1 bis 5 zur Bereitstellung des unter dem Überdruck (P₊) stehenden ersten Arbeitsmediums (5) und des unter dem Unterdruck (P₋) stehenden zweiten Arbeitsmediums (6) an einem Anschluss (3, 31, 32, 4, 41, 42) eines Teilsystems (2, 21, 22) in einem Subsystem (8, 801, 802, 803) umfasst, wobei das Bearbeitungssystem bevorzugt eine als Ausgangsperre (10) ausgebildete Absperreinrichtung umfasst, so dass ein Ausgang des Rohrleitungssystems (1) und / oder des Subsystems (8, 801, 803) und / oder des Teilsystems (2, 21, 22) zur Verhinderung eines Rückflusses eines Strahlmaterials und / oder eines Beschichtungsmaterials und / oder eines anderen Stoffes absperrbar ist.

## Claims

1. Sub-distributor, in particular a distributor for a plumbing unit for the treatment of an interior of a pipework system (1), comprising:
- an over-pressure chamber (8100) having an over-pressure inlet (8101) for applying the over-pressure chamber (8100) with a first working fluid (5) provided under an over-pressure (P+), as well as
- an over-pressure outlet (8102) for providing the first working fluid (5) to a first connection (3, 31, 32, 4, 41, 42) of the pipework system (1), and:
- a low-pressure chamber (8200) having a low-pressure inlet (8201) for applying the low-pressure chamber with a second working fluid (6) provided under a low-pressure (P-), as well as
- a low-pressure outlet (8202) for providing the second working fluid (6) to a second connection (3, 31, 32, 4, 41, 42) of the pipework system (1) is provided, wherein,
a heating element (9) is provided in the over-pressure chamber, in particular an electrical heating element (9), so that a temperature of the first working fluid (5) provided under an over-pressure (P+) is adjustable to a determinable value, **characterized in that** the over-pressure outlet (8102) and the low-pressure outlet (8202) are connected to each other with a common outlet adaptor (8500), and that the over-pressure inlet (8101) and / or the low-pressure inlet (8201) and / or the over-pressure outlet (8102) and / or the low-pressure outlet (8202) can be separately closed off by a closing-off means (8300, 8301, 8302), in particular by a mechanical cut-off cock (8300, 8301, 8302), especially by an automatic valve (8300, 8301, 8302), preferably by an electrally operable valve (8300, 8301, 8302).

2. Sub-distributor according to claim 1, wherein a switching means (8300) is provided so that a pressure line (8400) being connected to the sub-distributor (81) can be applied with the first working fluid (5) and / or with the second working fluid (6).

3. Sub-distributor according to one of the preceding claims, wherein a temperature controller is provided, with which the heating element can be controlled and regulated such, that the temperature of the first working fluid (5) provided under an over-pressure (P+) is adjustable to the determinable value.

4. Sub-distributor according to claim 3, wherein the temperature controller is provided directly at the sub-distributor and is preferably an integral part of the sub-distributor.

5. Sub-distributor according to one of the preceding claims, wherein a sensor means is provided at the sub-distributor for determining a signal, in particular for determining the temperature and / or a pressure, and / or a switch setting of the closing-off means (8300, 8301, 8302) and / or an other operation parameter of the sub-distributor and / or the first working fluid (5) and / or the second working fluid (6), and / or wherein the sub-distributor is designed and provided with a signal connection, in particular with an electrical connection in such a way, that the signal determined by the sensor means can be imported into a control system via the signal connection and / or the temperature controller and / or the closing-off means (8300, 8301, 8302) and / or the pressure and / or the other operation parameter of the sub-distributor can be controlled or regulated by the control system, preferably automatically or by a program.

6. Heating method for heating an interior of a pipework system (1), comprising the provision of a sub-distributor, in particular a distributor for a plumbing unit
- with an over-pressure chamber (8100) having an over-pressure inlet (8101) via which
the over-pressure chamber (8100) is applied with a first working fluid (5) provided under an over-pressure (P+), as well as
- an over-pressure outlet (8102) for providing the first working fluid (5) to a first connection (3, 31, 32, 4, 41, 42) of the pipework system, and:
- a low-pressure chamber (8200) having a low-pressure inlet (8201) for applying the low-pressure chamber with a second working fluid (6) provided under a low-pressure (P-), as well as
- a low-pressure outlet (8202) for providing the second working fluid (6) to a second connection (3, 31, 32, 4, 41, 42) of the pipework system (1) is provided, wherein,
a temperature of the first working fluid (5) provided under an over-pressure (P+) is adjusted to a determinable value by means of a heating element (9) provided in the over-pressure chamber, in particular an electrical heating element (9), **characterized in that** the over-pressure outlet (8102) and the low-pressure outlet (8202) are connected to each other with a common outlet adaptor (8500), and that the over-pressure inlet (8101) and / or the low pressure inlet (8201) and / or the over-pressure outlet (8102) and / or the low-pressure outlet (8202) can be separately closed off by a closing-off means (8300, 8301, 8302), in particular by a mechanical cut-off cock (8300, 8301, 8302), especially by an automatic valve (8300, 8301, 8302), preferably by an electrally operable valve (8300, 8301, 8302).

7. Heating method according to claim 6, wherein a switching means (8300) is provided and a pressure line (8400), connected to the sub-distributor (81) is applied with the first working fluid (5, 51, 52, 53, 54) and / or with the second working fluid (6, 61, 62, 63, 64), preferred alternatively.

8. Heating method according to one of the claims 6 or 7, wherein a temperature controller will be provided, which is preferably arranged directly to the sub-distributor (81) and which is especially an integral part of the sub-distributor (81), and the heating element (9) is controlled and regulated such, by means of the temperature controller, that the temperature of the first working fluid (5) provided under an over-pressure (P+) is adjusted to the determined value, preferably to at least 45°C.

9. Heating method according to one of the claims 6 to 8, wherein a sensor means will be provided at the sub-distributor for determining a signal, in particular for determining the temperature and / or a pressure, and / or a switch setting of the closing-off means (8300, 8301, 8302) and / or another operation parameter of the sub-distributor and / or the first working fluid (5) and / or the second working fluid (6), and the sub-distributor will be preferably designed and provided with a signal connection, in particular with electrical connections in such a way, that the signal determined by the sensor means will be imported into a control system via the signal connection and / or the temperature controller and / or the closing-off means (8300, 8301, 8302) and / or the pressure and / or the other operation parameter of the sub-distributor will be controlled or regulated by the control system, preferably automatically or by a program.

10. Heating method according to one of the claims 6 to 9, wherein the pipework system (1) is processed with a plurality of sub-distributors (81) and at least a first and a second sub-distributor (81) will be equipped with a heating element (9) and a temperature controller and the temperature of each sub-distributor (81) will be individually controlled or regulated.

11. Heating method according to one of the claims 6 to 10, wherein the heating method comprises a cleaning process for cleaning the interior of the pipework system (1), or a blasting process, especially a sandblasting process for sandblasting the interior of the pipework system (1), or a drying process for drying the interior of the pipework system (1), or a coating process for coating the interior of the pipework system (1), especially for coating by means of an epoxy resin in combination thereof.

12. Processing system for processing a pipeline system (1) according to a method accordind to one of the claims 6 to 11, wherein the processing system comprises a sub-distributor (81) according to one of the claims 1 to 5 for providing the first working fluid (5) provided under an over-pressure (P+) and the second working fluid (6) provided under a low-pressure (P-) to a connection (3, 31, 32, 4, 41,42) of a part-system (2, 21, 22) in a sub-system (8, 801, 802, 803), wherein the processing system preferably comprises a closing-off device configured as a closing-off outlet, so that an outlet of the pipework system (1) and / or of the sub-system (8, 801, 803) and / or of the part-system (2, 21,22) can be closed off for preventing a reflux of a blasting material and / or of a coating material and / or of any other substance.

## Revendications

1. Sous-distributeur, en particulier distributeur à cellules humides pour le traitement d'un intérieur d'un système de conduites (1), comprenant :
- une chambre de surpression (8100) avec une entrée sous surpression (8101) pour l'alimentation de la chambre de surpression (8100) avec un premier fluide de travail (5) sous surpression (P+), ainsi que
- une sortie sous surpression (8102) pour la mise à disposition du premier fluide de travail (5) au niveau d'un premier raccord (3, 31, 32, 4, 41, 42) du système de conduites (1), et :
- une chambre de dépression (8200) avec une entrée sous dépression (8201) pour l'alimentation de la chambre de dépression avec un deuxième fluide de travail (6) sous dépression (P-), ainsi que
- une sortie sous dépression (8202) pour la mise à disposition du deuxième fluide de travail (6) au niveau d'un deuxième raccord (3, 31, 32, 4, 41, 42) du système de conduites (1) est prévue, dans lequel
un élément de chauffage (9) est prévu dans la chambre de surpression, en particulier un élément de chauffage électrique (9), de telle sorte qu' une température du premier fluide de travail (5) sous surpression (P+) est réglable à une valeur prédéterminée, **caractérisé en ce que** la sortie sous surpression (8102) et la sortie sous dépression (8202) sont reliées à une tubulure de sortie (8500) commune et que l'entrée sous surpression (8101) et / ou l'entrée sous dépression (8201) et / ou la sortie sous surpression (8102) et / ou la sortie sous dépression (8202) pouvant être fermées séparément avec un organe d'arrêt (8300, 8301, 8302), en particulier avec un robinet d'arrêt (8300, 8301, 8302) mécanique, en particulier avec une vanne (8300, 8301, 8302) automatique, de préférence avec une vanne (8300, 8301, 8302) à commande électrique.

2. Sous-distributeur selon la revendication 1, dans lequel un dispositif de commutation (8300) est prévu, de telle sorte qu'une conduite sous pression (8400), reliée au sous-distributeur (81), peut être alimentée avec le premier fluide de travail (5) et / ou avec le deuxième fluide de travail (6).

3. Sous-distributeur selon l'une des revendications précédentes, dans lequel un régulateur de température est prévu, avec lequel l'élément de chauffage est commandé ou régulé de telle façon, que la température du premier fluide de travail (5) sous surpression (P+) est réglable à la valeur prédéterminée.

4. Sous-distributeur selon la revendication 3, dans lequel le régulateur de température est prévu directement au sous-distributeur et est de préférence une partie intégrale du sous-distributeur.

5. Sous-distributeur selon l'une des revendications précédentes, dans lequel un capteur destiné à déterminer un signal, en particulier à déterminer la température et / ou une pression et / ou une position de commutation d'un organe d'arrêt (8300, 8301, 8302) et / ou un autre paramètre de service du sous-distributeur et / ou du premier fluide de travail (5) et / ou du deuxième fluide de travail (6) est prévu au sous-distributeur, et / ou dans lequel le sous-distributeur est configuré et muni d' une liaison de signalisation, en particulier d'un raccord électrique, de telle sorte que le signal, déterminé du capteur, peut être entré dans un dispositif de commande par la liaison de signalisation et / ou le régulateur de température et / ou l'organe d'arrêt (8300, 8301, 8302) et / ou la pression et / ou l'autre paramètre de service du sous-distributeur peut être commandé ou régulé par le dispositif de commande, de préférence automatiquement et / ou commandé par un programme.

6. Procédé de chauffage pour chauffer d'un intérieur d'un système de conduites (1), comprenant la mise à disposition d'un sous-distributeur, en particulier distributeur à cellules humides
- avec une chambre de surpression (8100) avec une entrée sous surpression (8101) à travers laquelle
la chambre de surpression (8100) est alimentée avec un premier fluide de travail (5) sous surpression (P+), ainsi que
- une sortie sous surpression (8102), avec laquelle le premier fluide de travail (5) est mis à disposition au niveau d'un premier raccord (3, 31, 32, 4, 41, 42) du système de conduites, et :
- une chambre de dépression (8200) avec une entrée sous dépression (8201) pour l'alimentation de la chambre de dépression avec un deuxième fluide de travail (6) sous dépression (P-), ainsi que
- une sortie sous dépression (8202) pour la mise à disposition du deuxième fluide de travail (6) au niveau d'un deuxième raccord (3, 31, 32, 4, 41, 42) du système de conduites (1) est mis à disposition, dans lequel une température du premier fluide de travail (5) sous surpression (P+) est réglée à une valeur prédéterminée au moyen d'un élément de chauffage (9) prévu dans la chambre de surpression, en particulier un élément de chauffage électrique (9), **caractérisé en ce que** la sortie sous surpression (8102) et la sortie sous dépression (8202) sont reliées à une tubulure de sortie (8500) commune et que l'entrée sous surpression (8101) et / ou l'entrée sous dépression (8201) et / ou la sortie sous surpression (8102) et / ou la sortie sous dépression (8202) peut être fermée séparément avec un organe d'arrêt (8300, 8301, 8302), en particulier avec un robinet d'arrêt (8300, 8301, 8302) mécanique, en particulier avec une vanne (8300, 8301, 8302) automatique, de préférence avec une vanne (8300, 8301, 8302) à commande électrique.

7. Procédé de chauffage selon la revendication 6, dans lequel un dispositif de commutation (8300) est prévu et une conduite sous pression (8400), reliée au sous-distributeur (81) est alimentée avec le premier fluide de travail (5, 51, 52, 53, 54) et / ou avec le deuxième fluide de travail (6, 61, 62, 63, 64), préférée alternative.

8. Procédé de chauffage selon l'une des revendications 6 ou 7, dans lequel un régulateur de température est prévu, qui est déposé de préférence directement au sous-distributeur (81) et est en particulier une partie intégrale du sous-distributeur (81), et l'élément de chauffage (9) est commandé ou régulé au moyen du régulateur de température de telle façon, que la température du premier fluide de travail (5) sous surpression (P+) est réglée à la valeur prédéterminée, en préférence de 45°C.

9. Procédé de chauffage selon l'une des revendications 6 à 8, dans lequel un capteur destiné à déterminer un signal, en particulier à déterminer la température et / ou une pression et / ou une position de commutation d'un organe d'arrêt (8300, 8301, 8302) et / ou un autre paramètre de service du sous-distributeur et / ou du premier fluide de travail (5) et / ou du deuxième fluide de travail (6) est prévu au sous-distributeur, et le sous-distributeur est configuré et muni de préférence d' une liaison de signalisation, en particulier des raccords électriques, de telle sorte que le signal, déterminé du capteur, est entré dans un dispositif de commande par la liaison de signalisation et / ou le régulateur de température et / ou l'organe d'arrêt (8300, 8301, 8302) et / ou la pression et / ou l'autre paramètre de service du sous-distributeur est commandé ou régulé par le dispositif de commande, de préférence automatiquement et / ou commandé par un programme.

10. Procédé de chauffage selon l'une des revendications 6 à 9, dans lequel le système de conduites (1) est traité avec une pluralité de sous-distributeurs et au moins un premier et un deuxième sous-distributeur (81) est équipé avec un élément de chauffage (9) et un régulateur de température et la température de chaque sous-distributeur (81) est commandé ou régulé individuellement.

11. Procédé de chauffage selon l'une des revendications 6 à 10, dans lequel le procédé de chauffage comprend une méthode de nettoyage pour nettoyer l'intérieur du système de conduites (1), ou un procédé de grenaillage, en particulier un procédé de sablage pour dessabler l'intérieur du système de conduites (1), ou un procédé de séchage pour sécher l'intérieur du système de conduites (1), ou un procédé de revêtement pour revêtir l'intérieur du système de conduites (1), en particulier pour revêtir au moyen d'une résine époxy en combination.

12. Système de traitement pour le traitement d'un système de conduites (1), selon un procédé selon l'une des revendications 6 à 11, dans lequel le système de traitement comprend un sous-distributeur (81) selon l'une des revendications 1 à 5 pour la mise à disposition du premier fluide de travail (5) sous surpression (P+) et du deuxième fluide de travail (6) sous dépression (P-)) au niveau d'un raccord (3, 31, 32, 4, 41, 42) d'un système partiel (2, 21, 22) dans un sous-système (8, 801, 802, 803), dans lequel le système de traitement comprend en préférence un dispositif d'arrêt formé comme un arrêt de sortie (10), de sorte qu'une sortie du système de conduites (1) et / ou du sous-système (8, 801, 802, 803) et / ou du système partiel (2, 21, 22) peut être fermée pour la prévention d'un reflux d'un matériau de grenaillage et / ou d'un matériau de revêtement et / ou d'une autre substance.
